**Europäisches Patentamt**

**European Patent Office**

**Office européen des brevets**

(11) Veröffentlichungsnummer: **0 222 349**
**B1**

(12) # EUROPÄISCHE PATENTSCHRIFT

(45) Veröffentlichungstag der Patentschrift:
**22.03.89**

(51) Int. Cl.⁴: **E06B 3/66**, B65G 49/06

(21) Anmeldenummer: **86115490.4**

(22) Anmeldetag: **07.11.86**

(54) **Vorrichtung für das schlupffreie Fördern von zwei Tafeln, insbesondere von Glastafeln.**

(30) Priorität: **11.11.85 DE 3539879**

(43) Veröffentlichungstag der Anmeldung:
**20.05.87 Patentblatt 87/21**

(45) Bekanntmachung des Hinweises auf die Patenterteilung:
**22.03.89 Patentblatt 89/12**

(84) Benannte Vertragsstaaten:
**AT BE CH DE FR GB IT LI**

(56) Entgegenhaltungen:
**EP-A- 0 056 762**
**EP-A- 0 176 388**
**DE-A- 2 843 861**
**DE-A- 3 038 425**
**DE-A- 3 104 724**
**DE-A- 3 529 892**
**FR-A- 2 417 463**
**US-A- 2 999 036**

(73) Patentinhaber: **Lenhardt, Karl, Industriestrasse 2-4,**
**D-7531 Neuhausen-Hamberg(DE)**

(72) Erfinder: **Lenhardt, Karl, Industriestrasse 2-4,**
**D-7531 Neuhausen-Hamberg(DE)**

(74) Vertreter: **Twelmeier, Ulrich, Dipl.Phys. et al,**
**Patentanwälte Dr. Rudolf Bauer Dipl.-Ing.Helmut**
**Hubbuch, Dipl.Phys. Ulrich Twelmeier Westliche**
**Karl-Friedrich-Strasse 29-31, D-7530 Pforzheim(DE)**

ACTORUM AG

**Beschreibung**

Die Erfindung geht aus von einer Vorrichtung mit den im Oberbegriff des Anspruchs 1 angegebenen Merkmalen. Eine solche Vorrichtung ist in der DE 3 038 425 C2 beschrieben. Es handelt sich dabei um eine Vorrichtung für das Fördern von randverklebtem Isolierglas in annähernd vertikaler Stellung. Das randverklebte Isolierglas besteht aus zwei Glastafeln, welche durch einen beidseitig mit einer Klebemasse beschichteten Abstandhalterrahmen miteinander verbunden sind. Die Schenkellänge der Abstandhalterrahmen ist etwas kleiner als die Kantenlänge der Glastafeln, wodurch sich zwischen den beiden Glastafeln auf der Außenseite des Abstandhalterrahmens eine Randfuge ergibt, in welche eine Versiegelungsmasse eingefüllt wird, die das Eindringen von Feuchtigkeit in den Innenraum der Isolierglasscheibe verhindert.

Die aus der DE 3 038 425 C2 bekannte Vorrichtung hat einen Aufstellförderer mit Auflagern, welche die Glastafeln unter Aussparen der unteren Randfuge untergreifen und sich synchron in Laufrichtung der Vorrichtung bewegen und dadurch die Isolierglasscheibe fördern. Die seitliche Abstützung der Isolierglasscheibe erfolgt über eine Stützrollenzeile, an welcher die hintere Glastafel anliegt; die vordere Glastafel stützt sich über den Abstandhalterrahmen an der hinteren Glastafel ab. Damit beim Fördern der Isolierglasscheibe kein Schlupf auftritt und die Isolierglasscheibe nicht von den sie knapp untergreifenden Auflagern herunter rutscht, haben die Auflager eine L-förmige Gestalt, wobei die waagerechten Schenkel die Glastafel untergreifen und die hochstehenden Schenkel als Druckbacken auf die Außenseiten der beiden Glastafeln einwirken.

Die aus der DE 3 038 425 C2 bekannte Vorrichtung hat den Nachteil, daß der Angriff des Aufstellförderers am unteren Rand der Glastafeln gelegentlich zu Absplitterungen von Glas bis hin zum Glasbruch führt. Ein weiterer Nachteil der bekannten Vorrichtung liegt darin, daß sie sich nicht dazu eignet, Glastafeln zu fördern, welche zwar paarweise deckungsgleich und parallel zueinander auf Abstand gehalten, aber noch nicht miteinander verbunden sind. Eine Vorrichtung, die solches leistet ist in der DE 2 820 630 A1 beschrieben. Die aus dieser Druckschrift bekannte Vorrichtung hat einen waagerecht fördernden Aufstellförderer in Gestalt von synchron antreibbaren Rollen, wobei auf je einer Rollenachse nebeneinander zwei Rollen angeordnet sind, die durch eine Rutschkupplung verbunden sind. Zum Abstützen einer Glastafel über ihre eine Großfläche hat die Vorrichtung ein Stützrollenfeld, dessen Stützrollen eine gemeinsame Tangentialebene haben. Außerdem hat die Vorrichtung oberhalb des Aufstellförderers und zu diesem parallel verlaufend einen höhenverstellbaren Balken und an diesem eine Zeile von weiteren Stützrollen, welche vor der Tangentialebene des Stützrollenfeldes liegen und ebenfalls eine gemeinsame Tangentialebene haben, welche in entsprechendem Abstand vor der Tangentialebene des Stützrollenfeldes liegt. Außerdem ist die bekannte Vorrichtung parallel zu sich selbst vor und zurück verschiebbar gelagert. Dadurch ist es möglich, die Vorrichtung abwechselnd mit der Tangentialebene ihres Stützwalzenfeldes und mit der dazu parallelen Tangentialebene der Stützrollenzeile in die Flucht der Scheibenlaufebene eines vorangestellten Waagerechtförderers zu bringen, welcher die Glastafeln einzeln, noch ungepaart, hintereinander heranfördert. Die erste Glastafel eines Paares läßt man in die Vorrichtung einlaufen, wenn die Tangentialebene der Stützrollenzeile mit der Scheibenlaufebene des vorangestellten Waagerechtförderers fluchtet; die zweite Glastafel eines Glastafelpaares läßt man in die Vorrichtung einlaufen, wenn die Tangentialebene des Stützrollenfeldes mit der Scheibenlaufebene des vorangestellten Waagerechtförderers fluchtet. Auf diese Weise lassen sich in der Vorrichtung die Glastafeln paarweise auf Abstand zur Deckung bringen und unverbunden synchron weiterfördern. Die bekannte Vorrichtung hat allerdings den Nachteil, daß die jeweils vordere Glastafel an ihrem unteren Rand nicht gegen seitliches Verrutschen gesichert ist, daß ein schlupffreies Fördern nicht gewährleistet ist, weil lediglich ein vom Gewicht der Glastafeln abhängiger Reibungsschluß mit den Rollen des Aufstellförderers besteht, und daß die jeweils vordere Glastafel durch die in den Zwischenraum zwischen den Glastafeln eintauchenden Stützrollen der einen Stützrollenzeile abgestützt ist, so daß die obere Randfuge zwischen den beiden Glastafeln nicht völlig frei liegt. Ein weiterer Nachteil der bekannten Vorrichtung liegt darin, daß man mit ihr nur Glastafeln in nahezu vertikaler Stellung fördern kann, nicht jedoch in stark geneigter oder gar waagerechter Stellung.

Der Erfindung liegt die Aufgabe zugrunde, eine Vorrichtung der eingangs genannten Art zu schaffen, mit welcher sich Paare von verbundenen und von unverbundenen Tafeln nicht nur in annähernd vertikaler Stellung schlupffrei fördern lassen, ohne daß ein Eingriff von Stützelementen oder Förderelementen in den Zwischenraum zwischen den zwei Glastafeln eines Paares nötig wäre.

Diese Aufgabe wird gelöst durch eine Vorrichtung mit den im Anspruch 1 angegebenen Merkmalen. Vorteilhafte Weiterbildungen der Erfindung sind Gegenstand der Unteransprüche.

Die erfindungsgemäß vorgesehenen, einander gegenüberliegenden Saugförderer greifen an den einander abgewandten Großflächen der beiden Tafeln eines Paares an und saugen die beiden Tafeln — jede für sich — an. Dadurch kann ein Schlupf zwischen den Saugförderern und den an ihnen haftenden Tafeln ausgeschlossen werden, während die Saugförderer die beiden Tafeln entlang zueinander paralleler Wege fördern.

Die einander gegenüberliegenden Saugförderer definieren jeweils eine Berührungsebene, welche mit der Großfläche der jeweiligen Tafel zusammenfällt, mit welcher sie an dem Saugförderer anliegt. Die beiden durch die Lage der Saugförderer in der Vorrichtung vorgegebenen Berührungsebenen werden nachfolgend als die Laufebenen der beiden Tafeln bezeichnet.

Die Saugförderer entfalten ihre Wirkung ausschließlich auf den außen liegenden Großflächen der Tafeln und lassen – was ein besonderer Vorteil der Erfindung ist – den Rand der Tafeln völlig unberührt und ragen auch nicht in den Zwischenraum zwischen zwei Tafeln hinein. Es ist deshalb möglich, die Tafeln an ihrem Rand zu bearbeiten oder mit Werkzeugen in den Zwischenraum zwischen zwei Tafeln einzutauchen, während die Tafeln an den Saugförderern anliegen, gleichgültig, ob sie dabei bewegt werden oder in Ruhe sind. So besteht zum Beispiel die Möglichkeit, in dem Zwischenraum zwischen zwei zunächst unverbundenen Glastafeln längs ihres Randes einen Strang aus einer pastösen und nachfolgend erstarrenden Masse einzuspritzen, wodurch die Glastafeln in <u>einem</u> Arbeitsgang zusammengefügt und versiegelt werden; um auf solche Weise Isolierglas herstellen zu können, ist es wichtig, daß die beiden miteinander zu verbindenden Glastafeln während des Einspritzens der pastösen Massen und auch noch für einen gewissen Zeitraum danach, bis diese Masse hinreichend weit erstarrt ist, nicht gegeneinander gedrückt werden, da der noch nicht erstarrte Strang keine größeren Druckkräfte aufnehmen kann. Da die Saugförderer zum Halten der Glastafeln auf diese eine Saugkraft, aber keine Druckkraft ausüben, kann diese Forderung durch eine erfindungsgemäße Vorrichtung ohne weiteres erfüllt werden. Das Positionieren der Tafeln in dem nötigen Abstand voneinander kann mit Hilfe der einander gegenüberliegenden Saugförderer geschehen, indem man diese in ihrem gegenseitigen Abstand veränderbar anordnet. So kann man z.B. zunächst eine einzelne Glasscheibe an einem ersten Saugförderer anliegend heranfördern, an vorbestimmter Stelle anhalten, den gegenüberliegenden Saugförderer auf die Glasscheibe zustellen, mit ihm die Glasscheibe ansaugen und übernehmen und auf Abstand von dem ersten Saugförderer bringen und in Ruhe halten, während eine zweite, gleichgroße Glasscheibe wiederum durch den ersten Saugförderer herangefördert und an der vorbestimmten Stelle angehalten wird, so daß sie deckungsgleich zur ersten Glasscheibe liegt. So positioniert können die beiden Glasscheiben durch synchronen Antrieb der beiden Saugförderer unter Beibehaltung ihres Abstandes synchron weitergefördert werden. Zum Verändern des gegenseitigen Abstandes der einander gegenüberliegenden Saugförderer geeignete Verstelleinrichtungen sind dem Fachmann an sich bekannt. Durch die Mittel zum Verändern des Abstandes von zwei einander gegenüberliegenden Saugförderern kann natürlich – wenn dieses aus anderen Gründen gewünscht sein sollte – auf einen zwischen zwei Tafeln befindlichen Strang, Abstandhalter, Werkzeug oder dergleichen ein mehr oder weniger starker Druck ausgeübt werden, aber das ist keineswegs zwingend, sondern nur eine alternative Möglichkeit, die zur Vielfalt der Einsatzmöglichkeiten der erfindungsgemäßen Vorrichtung beiträgt.

Wird in der beschriebenen Weise zwischen zwei Glastafeln ein Strang aus einer zunächst pastösen Masse eingespritzt, dann zeigt sich ein weiterer Vorteil der erfindungsgemäßen Vorrichtung darin, daß dieser Strang an keiner Stelle unter der Einwirkung eines Stützelementes oder eines Förderelementes steht, welches den Strang deformieren oder beschädigen könnte. Wegen dieses Vorzuges eignen sich die erfindungsgemäßen Vorrichtungen auch hervorragend zum Fördern von Isolierglas, deren Glastafeln zunächst unter Zwischenfügen eines beidseitig mit einer Klebemasse beschichteten Abstandhalterrahmens verbunden und anschließend mit einer Versiegelungsmasse versiegelt werden.

In beiden Fällen liegt ein weiterer Vorteil der Erfindung darin, daß die Förderelemente nicht am Rand der Glastafeln angreifen, so daß Absplitterungen oder gar totaler Glasbruch beim Fördern praktisch nicht auftreten.

Ein weiterer Vorteil der Erfindung liegt darin, daß Saugförderer im Prinzip in jeder beliebigen räumlichen Orientierung wirksam sind, so daß Tafeln grundsätzlich in beliebiger Stellung gefördert werden können, also nicht nur in vertikaler oder annähernd vertikaler Stellung, sondern auch in geneigter und sogar in waagerechter Stellung, obwohl im Hinblick auf die bevorzugte Anwendung der Vorrichtung für das Fördern von Glastafeln das Fördern in annähernd vertikaler Stellung angestrebt und bevorzugt wird. Es ist klar, daß das beanspruchte Förderprinzip nicht nur auf das Fördern von Glastafeln anwendbar ist, sondern auch auf andere Tafeln, sofern diese eine für den Angriff von Saugförderern geeignete Oberfläche haben, also z.B. auf Tafeln aus Holz, Kunststoff oder Blech.

Je nach Größe der zu fördernden Tafeln kann es von Vorteil sein, mehrere Saugförderer in Laufrichtung der Vorrichtung hintereinander anzuordnen und/oder wenigstens auf einer Seite der beiden Laufebenen zwei oder mehr, vorzugsweise drei Saugförderer vorzusehen, welche in Laufrichtung nebeneinander angeordnet sind und – damit sie auf ein und dieselbe Tafel einwirken können – eine gemeinsame Laufebene haben. Der Abstand dieser auf einer Seite einer Laufebene nebeneinanderliegenden Saugförderer ist vorzugsweise veränderbar, um die Lage der Saugförderer wechselnden Tafelformaten anpassen zu können; dabei wählt man den Abstand zweckmäßigerweise so, daß die jeweilige Tafel durch die Saugförderer möglichst ausgewogen abgestützt bzw. gehalten wird, um insgesamt mit möglichst wenig Saugleistung auskommen zu können. Im Falle von mehr als zwei auf einer Seite einer Laufebene nebeneinander liegenden Saugförderern ist deren Abstand vorzugsweise in der Weise veränderbar, daß die Abstandsverhältnisse erhalten bleiben; im Falle von drei in gleichen Abständen nebeneinander angeordneten Saugförderern bedeutet das, daß der mittlere Saugförderer stets um die Hälfte des Weges seines einen benachbarten Saugförderers verschoben wird, wenn sein anderer benachbarter Saugförderer in seiner Lage unverändert bleibt.

Für den Fall, daß Tafeln gefördert werden sollen, deren Erstreckung quer zur Laufrichtung der Vorrichtung erheblich größer ist als die Erstreckung der Saugförderer, kann es von Vorteil sein, für das Abstützen einer solch großen Tafel über ihre eine Großfläche eine zusätzliche, nicht als Saugförderer ausgebildete Stützeinrichtung vorzusehen, deren Stützebene mit der Laufebene des bzw. der benachbarten Saugförderer zusammenfällt. Bei der zusätzlichen Stützeinrichtung könnte es sich um ein Stützrollenfeld, um ein Stützwalzenfeld oder um eine Stützwand, insbesondere um eine Luftkissenwand handeln, welche ein reibungsarmes Fördern ermöglicht. Der Vorteil einer solchen zusätzlichen Stützeinrichtung liegt darin, daß sie weniger Aufwand erfordert, als ein weiterer Saugförderer an ihrer Stelle.

Der Einsatz einer zusätzlichen Stützeinrichtung neben einem Saugförderer setzt natürlich voraus, daß der oder die bereits vorgesehenen Saugförderer für das Halten und schlupffreie Fördern der bestimmungsgemäßen Tafeln ausreichend dimensioniert sind.

Falls als zusätzliche Stützeinrichtung eine Luftkissenwand verwendet wird, kann es von Vorteil sein, diese dadurch funktionell mit den Saugförderern zu verbinden, daß man beide mit demselben Gebläse betreibt, indem man die Luftkissenwand mit der Blasseite des Gebläses und die Saugförderer mit der Saugseite desselben Gebläses verbindet. Eine derartige Verbindung verspricht einen wirtschaftlichen Betrieb der Vorrichtung.

Man könnte daran denken, als Saugförderer einzelne Saugnäpfe oder Saugteller zu verwenden, welche längs eines vorgegebenen Weges in Laufrichtung der Vorrichtung an einem Rahmenteil der Vorrichtung zwangsgeführt bewegbar sind. Auf diese Weise arbeitende Saugförderer sind in der DE-PS 2 846 785 offenbart; sie sind dort allerdings nur auf einer Seite der Laufebene einer Isolierglasscheibe angeordnet und ergreifen diese demgemäß nicht auf beiden Seiten, sondern nur auf einer Seite.

Weniger aufwendig und vielseitiger in der Anwendung, insbesondere bei wechselnden Tafelformaten und bei in unregelmäßigen Abständen aufeinanderfolgenden Tafeln ist die Verwendung eines Saugförderers, wie er im Anspruch 10 beansprucht ist. Ein solcher Saugförderer ist im einzelnen in der älteren, jedoch nicht vorveröffentlichten deutschen Patentanmeldung P 35 29 892.8 beschrieben. Er hat den Vorteil, daß er sich im Betrieb ähnlich günstig verhält wie ein endloses Förderband mit dem zusätzlichen Vorteil, daß durch den Unterdruck, welcher sich im Unterdruckkanal einstellt, soweit dieser durch eine Tafel abgedeckt ist, ein Schlupf zwischen den Tafeln und den endlosen Riemen, welche den Unterdruckkanal flankieren, unterbunden wird. Von nicht zu unterschätzender Bedeutung für den Einsatz eines solchen Saugförderers in der erfindungsgemäßen Vorrichtung ist es, daß die Reibung der Riemen durch die Saugkraft nicht zu stark und damit der Kraftbedarf für das Antreiben der Riemen nicht zu groß wird. Dieses Problem ist insbesondere dann von Bedeutung, wenn großflächige, schwere Tafeln zu bewegen sind. Es empfiehlt sich dann eine Ausführungsform des Saugförderers, in welcher die Riemen mit ihrem Arbeitstrum (das ist das Trum, welches zur Anlage an der zu fördernden Tafel gelangt) nicht über eine ruhende Fläche hinweggezogen werden, welche die Ansaugkraft aufnimmt, sondern auf Rollen, insbesondere auf einer dichten Folge freilaufender Rollen gelagert sind, wodurch sichergestellt werden kann, daß auch große und schwere Glastafeln noch mit mäßigem Kraftaufwand gefördert werden können. Ein Saugförderer dieser Art mit Riemen, deren Arbeitstrum auf Rollen gelagert ist, ist ausführlich in der europäischen Patentanmeldung Nr. 86 111 304.1 mit dem Titel "Vorrichtung für das schlupffreie Fördern von Stückgut in beliebiger Position, insbes. geneigter oder im wesentlichen vertikaler Stellung" beschrieben, worauf hiermit Bezug genommen wird.

Soweit die erfindungsgemäße Vorrichtung nicht zum Fördern von Tafeln in waagerechter Stellung, sondern in geneigter, insbesondere in vertikaler oder annähernd vertikaler Stellung dienen soll, kann man unterhalb der Saugförderer mit Vorteil einen synchron mit den Saugförderern antreibbaren Aufstellförderer anordnen, der Auflager für den unteren Rand der Tafeln hat, die sich vorzugsweise von der einen bis zur anderen Laufebene erstrecken. Einen solchen zusätzlichen Aufstellförderer kann man vorsehen, soweit es beim Fördern der Tafeln nicht darauf ankommt, den unteren Rand der Tafeln von Förderelementen freizuhalten. Der zusätzliche Aufstellförderer hat den Vorteil, daß er die Saugförderer entlasten kann, indem er sich an der Aufgabe zum Stützen und Fördern der Tafeln beteiligt; insbesondere kann durch einen solchen Aufstellförderer die sonst benötigte Zahl von Saugförderern oder ihre Größe oder ihre Saugleistung vermindert werden. Sofern ein solcher zusätzlicher Aufstellförderer vorgesehen ist, ist er vorzugsweise absenkbar ausgebildet, so daß er bei Bedarf zeitweise vom unteren Rand der Tafeln entfernt werden kann. Bei dem Aufstellförderer könnte es sich um ein in üblicher Weise abgestütztes endloses Förderband handeln, vorzugsweise verwendet man jedoch eine Zeile aus synchron antreibbaren Rollen, auf deren Mantelflächen die Tafeln mit ihrem unteren Rand stehen.

Der zusätzliche Aufstellförderer ist außerdem eine Sicherung gegen ein Herabgleiten der Tafeln von den Saugförderern bei plötzlichem Nachlassen der Saugkraft infolge einer Betriebsstörung. Sofern ein zusätzlicher Aufstellförderer nicht vorgesehen ist, empfiehlt es sich, unterhalb der unteren Saugförderer in einigem Abstand von der vorgegebenen Bewegungsbahn des unteren Randes der Tafeln sicherheitshalber Auffangelemente, z.B. sich quer zur Laufrichtung von einer bis zur anderen Laufebene erstreckende Stifte vorzusehen.

Es wurde bereits erwähnt, daß die erfindungsgemäße Vorrichtung sich besonders zum Fördern von versiegelten Isolierglasscheiben sowie zum Fördern von Glastafelpaaren eignet, welche erst durch Einspritzen eines Stranges aus einer zunächst pastösen und nachfolgend erstarrenden Masse zu einer Isolierglasscheibe verbunden werden. Die Düsen, mit deren Hilfe ein solcher pastöser Strang in den Zwischenraum zwischen zwei Glastafeln eingespritzt werden kann oder mit deren Hilfe zwei bereits mittels eines Abstandhalterrahmens verklebte Glastafeln abschließend versiegelt werden, können in eine erfindungsgemäße Vorrichtung leicht integriert werden. Vorzugsweise sieht man zu diesem Zweck zwischen zwei in Laufrichtung aufeinander folgenden Abschnitten der Vorrichtung, in welchen sich jeweils mindestens zwei einander gegenüberliegende und erfindungsgemäß zusammenwirkende Saugförderer befinden, wenigstens eine Düse vor, wobei von diesen Düsen wenigstens eine quer zur Laufrichtung der Saugförderer parallel zu den beiden Laufebenen verfahrbar ist, wobei die Austrittsöffnung oder die Austrittsöffnungen der einen Düse oder der mehreren Düsen zwischen den beiden Laufebenen liegt bzw. liegen. Von den im ersten Abschnitt der Vorrichtung liegenden Saugförderern werden die Glastafeln zu den Düsen hingeführt, von den im zweiten Abschnitt der Vorrichtung liegenden Saugförderern werden sie abgefördert, und im Zwischenraum zwischen den beiden Abschnitten der Vorrichtung liegt die Bewegungsbahn für wenigstens eine quer zur Laufrichtung der Glastafeln verfahrbare Düse. Der Abstand zwischen den beiden Abschnitten der Vorrichtung wird so klein gehalten, daß er von den zu fördernden Glastafeln ohne Schwierigkeiten und ohne Schlupf überbrückt werden kann. Da die in diesem Zwischenraum operierende Düse nicht viel Platz beansprucht, kann der Abstand zwischen den beiden Abschnitten der Vorrichtung hinreichend klein gehalten werden.

Grundsätzlich könnte man für die vier Ränder eines Glastafelpaares vier verschiedene Düsen vorsehen. Vorzugsweise verwendet man jedoch entweder nur _eine_ Düse, welche in der beanspruchten Art und Weise quer zur Laufrichtung der Glastafeln beweglich und fortschreitend um jeweils 90° schwenkbar ist, oder _zwei_ Düsen, von denen eine in der beanspruchten Art und Weise quer zur Laufrichtung der Glastafeln verschiebbar und fortschreitend um jeweils 90° schwenkbar ist, während die andere in Höhe der Laufbahn des unteren Randes des Glastafelpaares angeordnet und nur zum Erzeugen eines Stranges längs dieses unteren Randes des Glastafelpaares vorgesehen ist. Verwendet man in der beschriebenen Weise eine oder auch zwei Düsen, dann arbeitet man damit am besten so, daß die beiden quer zur Transportrichtung verlaufenden Ränder eines Glastafelpaares bearbeitet werden, während die Glastafeln ruhen, wohingegen man die beiden zur Transportrichtung parallel verlaufenden Ränder des Glastafelpaares im Durchlauf bei ruhender bzw. ruhenden Düsen bearbeitet.

Weitere mögliche Anordnungen von Düsen und deren Bewegungsabläufen, darunter auch solche, in denen eine Düse auch in Laufrichtung oder entgegen der Laufrichtung der Glastafeln bewegbar ist, um die zur Transportrichtung parallelen Ränder von ruhenden Glastafelpaaren versiegeln zu können, sind in der DE 2 816 437 C2 und in der DE 2 846 785 C2 beschrieben.

Insbesondere ist es auch möglich, zwei Düsen vorzusehen, die längs zweier paralleler Bewegungsbahnen schräg zur Laufrichtung parallel zu den Laufebenen verfahrbar und um eine zu den Laufebenen senkrechte Achse verschwenkbar sind, wie es die DE 2 816 437 C2 im zweiten Ausführungsbeispiel zeigt. Der Vorteil einer solchen Anordnung liegt darin, daß beide Düsen ihre Arbeit gleichzeitig oder annähernd gleichzeitig an einer ersten gemeinsamen Ecke beginnen und gleichzeitig oder annähernd gleichzeitig an der gegenüberliegenden Ecke beenden können, so daß die beiden Stränge, die durch sie erzeugt werden, an den beiden Enden miteinander verbunden werden, solange sie noch frisch (heiss) sind, wodurch leicht ein dichter Anschluss der beiden Stränge erzielbar ist.

In einer Vorrichtung, welche zum Versiegeln einer aus zwei Glastafeln gebildeten Isolierglasscheibe mit nur _einer_ Düse arbeitet, sieht man am besten in Laufrichtung der Glastafeln hintereinander drei Abschnitte vor, welche jeweils mindestens zwei einander gegenüberliegende und in der erfindungsgemäßen Weise zusammenarbeitende Saugförderer haben, wobei die eine Düse zwischen dem ersten und dem zweiten Abschnitt vorgesehen ist, welche beide zusätzlich zu den Saugförderern noch einen Aufstellförderer haben, auf deren Auflagern die Glastafeln stehen, wobei die Auflager des Aufstellförderers im zweiten Abschnitt der Vorrichtung absenkbar sind. Im dritten Abschnitt der Vorrichtung ist in dieser Ausführungsform der Erfindung unter den Saugförderern entweder kein Aufstellförderer vorgesehen, oder es ist ein Aufstellförderer vorgesehen, aber dann sind seine Auflager für den unteren Rand der Glastafeln auf jeden Fall absenkbar, so daß die Glastafeln in diesem dritten Abschnitt ohne Berührung ihres Randes gefördert werden können. Der Arbeitsablauf in einer solchen Vorrichtung wird an Hand der beigefügten Zeichnungen noch näher beschrieben, so daß an dieser Stelle weitere Erläuterungen entbehrlich sind.

Bei Verwendung einer erfindungsgemäßen Vorrichtung zum Versiegeln einer aus zwei Glastafeln gebildeten Isolierglasscheibe mit _zwei_ Düsen kommt man ohne weiteres mit einer aus zwei Abschnitten bestehenden Vorrichtung aus, wobei in beiden Abschnitten jeweils mindestens zwei einander gegenüberliegende und in der erfindungsgemäßen Weise zusammenarbeitende Saugförderer vorgesehen sind und zwischen den beiden Abschnitten zumindestens die eine, quer zur Laufrichtung verfahrbare, Düse, vorzugsweise aber auch die zweite, nur auf den unteren Rand der Glastafeln zustellbare Düse angeordnet ist. In diesem Fall sieht man im ersten Abschnitt der Vorrichtung mit Vorteil einen zusätzlichen Aufstellförderer mit Auflagern für den unteren Rand der Glastafeln vor, welche absenkbar sind, während im zweiten Abschnitt der Vorrichtung entweder kein zusätzlicher Aufstellförderer vorgesehen ist, oder es ist einer vorgesehen, aber dann jedenfalls mit absenkbaren Auflagern. Auch die Arbeitsweise einer solchen Vorrichtung mit zwei Düsen wird an Hand der beigefügten Zeichnungen noch beschrieben werden, so daß sich ein weiteres Eingehen darauf an dieser Stelle erübrigt.

Der Zusammenbau von Isolierglasscheiben aus zwei Glastafeln, indem in den Zwischenraum zwischen den beiden Glastafeln ein Strang aus einer zunächst pastösen und nachfolgend erstarrenden Masse eingespritzt wird, welche nach dem Erstarren einerseits die beiden Glastafeln auf Abstand hält, sie andererseits aber auch miteinander fest verbindet und ihren Innenraum feuchtigkeitsdicht versiegelt, lässt sich mit einer erfindungsgemäßen, mit Versiegelungsdüsen ausgerüsteten Vorrichtung auf elegante Weise durchführen, was durch einen Vergleich mit dem Stand der Technik, wie er in der DE 2 310 501 A1 niedergelegt ist, augenfällig wird. In dieser Druckschrift ist eine Vorrichtung beschrieben, in welcher Glastafelpaare mittels einer feststehenden Düse versiegelt werden, welche unter Zwischenfügen eines Abstandhalters provisorisch miteinander verklammert sind. Die zusammengeklammerten Glastafelpaare müssen nach dem Einspritzen eines Stranges längs eines der Glastafelränder um 90° verschwenkt werden, um längs des angrenzenden Randes den nächsten Strang einspritzen zu können, und bevor der letzte Strang gebildet wird, sind zunächst der provisorisch zwischengefügte Abstandhalter und die Klammern zu entfernen. Eine rationelle, automatisierte Fertigung ist mit einer solchen Vorrichtung im Gegensatz zur erfindungsgemäßen Vorrichtung nicht möglich.

Düsen, die sich zum Einspritzen eines einschichtigen oder eines zweischichtigen Stranges in den Zwischenraum zwischen zwei Glastafeln eignen, sind in der europäischen Patentanmeldung Nr. 86 111 303.3 mit dem Titel "Vorrichtung zum Verbinden zweier Glastafeln zu einer randverklebten Isolierglasscheibe" und in der deutschen Patentanmeldung mit dem Titel "Abstandhalter an einer Vorrichtung zum Verbinden zweier Glastafeln zu einer randverklebten Isolierglasscheibe", Aktenzeichen P 35 39 878.7, beschrieben, worauf hiermit Bezug genommen wird.

Beim Zusammenbau von Isolierglasscheiben in annähernd vertikaler Stellung bedarf die eine der beiden Glastafeln, nämlich jene, welche an den Saugförderern lediglich hängt, einer besonders zuverlässigen Halterung, solange sie nicht mit der gegenüberliegenden Glastafel verbunden ist, welche durch ihren Saugförderer auch abgestützt wird, weil sie sich an ihn anlehnt. Deshalb empfiehlt es sich, im ersten Abschnitt der Vorrichtung, in welchem die Glastafeln zunächst noch unverbunden sind, auf jener Seite der Laufebene, auf welcher die Glastafeln von einem Saugförderer nur hängend gehalten werden können, zwei oder mehr Saugförderer übereinander anzuordnen, welche eine gemeinsame Laufebene haben und gemeinsam die eine hängende Glastafel festhalten; auf der gegenüberliegenden Seite der Laufebenen hingegen reicht es im ersten Abschnitt aus, wenn man nicht mehrere Saugförderer übereinander anordnet, sondern nur einen, welcher dem unteren Saugförderer auf der anderen Seite der Laufebenen gegenüberliegt, wobei man diesen einen Saugförderer zweckmäßigerweise ergänzt um eine darüber angeordnete Stützeinrichtung, insbesondere eine Luftkissenwand, durch welche Glastafeln, welche den einen Saugförderer wesentlich überragen, abgestützt werden können. Im letzten Abschnitt der Vorrichtung hingegen, in welchem die Isolierglasscheibe längs allen vier Rändern versiegelt ist, kann die Versiegelungsmasse bereits einen Teil der Haltekraft für die im ersten Abschnitt der Vorrichtung nur hängend geförderte Glastafel übernehmen, so daß für diese im letzten Abschnitt der Vorrichtung nur noch ein Saugförderer benötigt wird, welcher zweckmäßigerweise nahe dem unteren Glastafelrand angreift. Auf der gegenüberliegenden Seite der Laufebenen benötigt man hingegen im letzten Abschnitt der Vorrichtung zumindest bei großformatigen Glastafeln zwei oder mehr Saugförderer übereinander, welche gemeinsam auf die Isolierglasscheibe einwirken und sie ohne Abstützung ihres unteren Randes durch einen zusätzlichen Aufstellförderer sicher halten und fördern.

Um zwei Tafeln parallel zueinander mit Abstand zur Deckung zu bringen, in welcher Lage sie von der erfindungsgemäßen Vorrichtung gefördert werden sollen, kann man vor dieser Vorrichtung eine Vorrichtung anordnen, wie sie in der DE 2 820 630 A1 beschrieben ist und welche die mit Abstand zur Deckung gebrachten Tafeln in die erfindungsgemäße Vorrichtung hineinfördert. Man kann aber auch zwei Tafeln unmittelbar in der erfindungsgemäßen Vorrichtung mit Abstand zueinander zur Deckung bringen, indem man zunächst eine der Tafeln in einer der Laufebenen der Vorrichtung heranfördert bis in eine vorgegebene Halteposition, dann den oder die gegenüberliegenden Saugförderer auf diese Tafel zustellt, die Tafel ansaugt und mit diesen Saugförderern quer zur Laufrichtung aus der Laufebene, in der sie in die Vorrichtung eingelaufen sind, heraushebt in die dazu parallele zweite Laufebene der Vorrichtung; danach kann man die zweite Tafel in derselben Laufebene, in der die erste Tafel eingelaufen ist, in die Vorrichtung einlaufen lassen und in derselben Halteposition anhalten, in welcher auch die erste Tafel angehalten wurde. Die beiden Tafeln sind dann deckungsgleich auf Abstand positioniert und können durch den synchronen Antrieb der auf beiden Seiten der Laufebenen liegenden Saugförderer synchron abgefördert werden.

Zwei Ausführungsbeispiele der Erfindung sind in den beigefügten Zeichnungen schematisch dargestellt und werden nachstehend beschrieben.

Fig. 1 zeigt eine Isolierglaszusammenbaulinie in der Draufsicht, welche eine erfindungsgemäße Vorrichtung enthält und in welcher zwei Glastafeln dadurch zu einer Isolierglasscheibe vereinigt werden, daß mittels nur einer Düse zwischen die beiden Glastafeln ein Strang aus einer pastösen, nachfolgend erstarrenden Masse längs der Glastafelränder eingespritzt wird,

Fig. 2 zeigt aus dieser Isolierglaszusammenbaulinie in der Vorderansicht die Paarungsstation, in welcher zwei aufeinanderfolgende Glastafeln mit Abstand parallel zueinander zur Deckung gebracht werden,

Fig. 3 zeigt – bei Blickrichtung in Laufrichtung der Glastafeln durch die Zusammenbaulinie – die Paarungsstation in der Seitenansicht,

Fig. 3a und 3b zeigen bei Blickrichtung wie in Fig. 3, jedoch vergrößert als Detail die Art und Weise, wie in der in Fig. 3 dargestellten Paarungsstation die jeweils vordere Glastafel am oberen bzw. unteren Rand abgestützt wird,

Fig. 4 zeigt die Ansicht IV–IV auf den hinter den Laufebenen liegenden Teil des ersten Abschnittes der erfindungsgemäßen Fördervorrichtung,

Fig. 5 zeigt die Ansicht V–V auf den vor den Laufebenen liegenden Teil des ersten Abschnittes der erfindungsgemäßen Fördervorrichtung,

Fig. 6 zeigt den Querschnitt VI–VI durch den ersten Abschnitt der erfindungsgemäßen Fördervorrichtung,

Fig. 7 zeigt als Detail in vergrößertem Maßstab einen Querschnitt durch den ersten Abschnitt der Fördervorrichtung wie in Fig. 6, jedoch anders als in Fig. 6 mit dicht übereinander positionierten Saugförderern

Fig. 8 zeigt einen Querschnitt längs der Linie VIII–VIII durch den letzten Abschnitt der erfindungsgemäßen Fördervorrichtung,

Fig. 8a zeigt als Detail aus Fig. 8 die Anordnung von Sicherungsstiften unter den Saugförderern, und

Fig. 9 zeigt die Draufsicht auf eine Isolierglaszusammenbaulinie, welche eine erfindungsgemäße Vorrichtung enthält und in welcher aus zwei Glastafeln eine Isolierglasscheibe zusammengebaut wird, indem mit zwei Düsen ein Strang aus einer pastösen und nachfolgend erstarrenden Masse in den Zwischenraum zwischen den zwei Glastafeln längs der Glastafelränder eingespritzt wird.

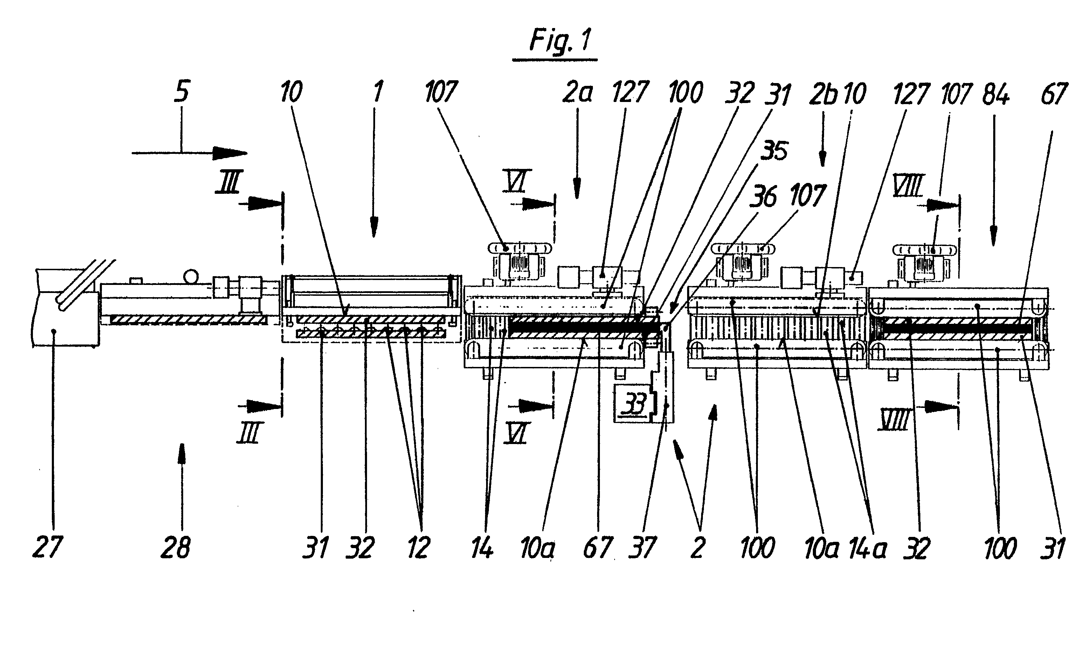

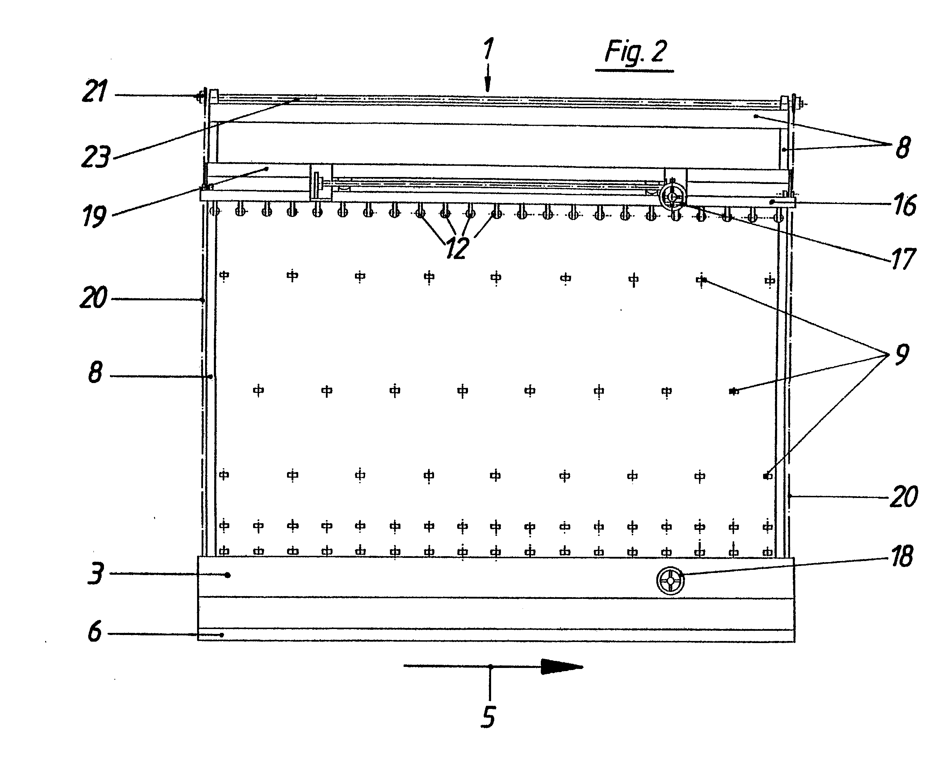

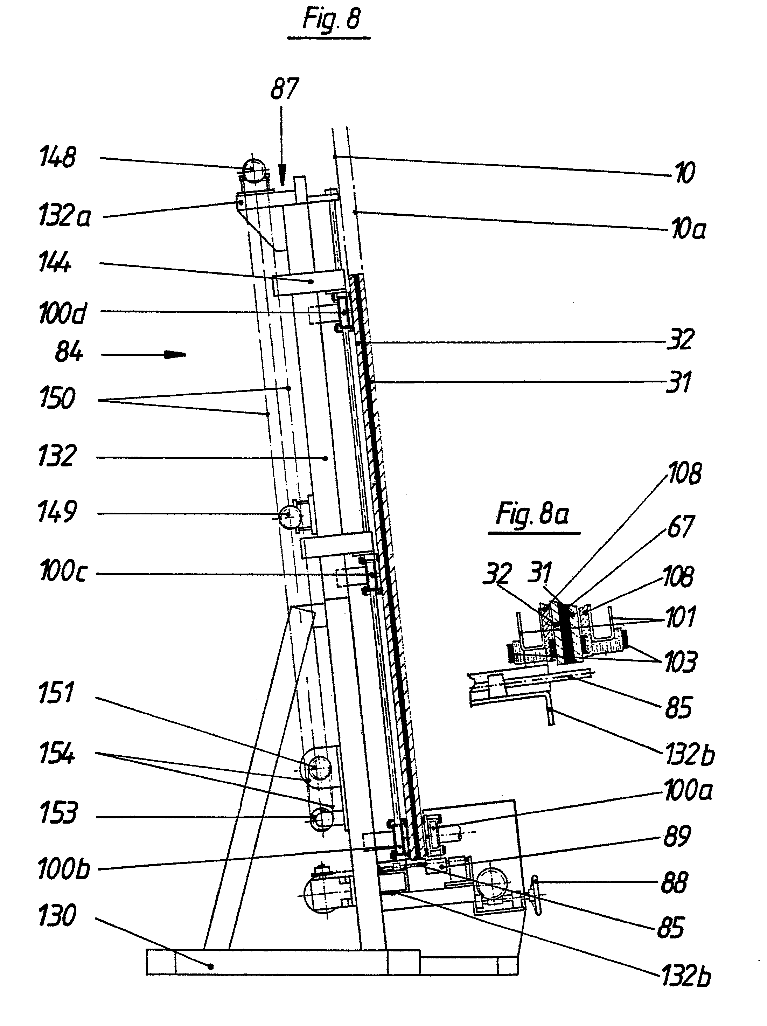

Die in den Fig. 1 bis 8 dargestellte Vorrichtung enthält in Laufrichtung (Pfeil 5) aufeinanderfolgend eine Waschmaschine 27, einen Zwischenförderer 28, eine Paarungsstation 1, eine aus zwei aufeinanderfolgenden Abschnitten 2a und 2b bestehende Versiegelungsstation 2 und eine Abnahmestation 84.

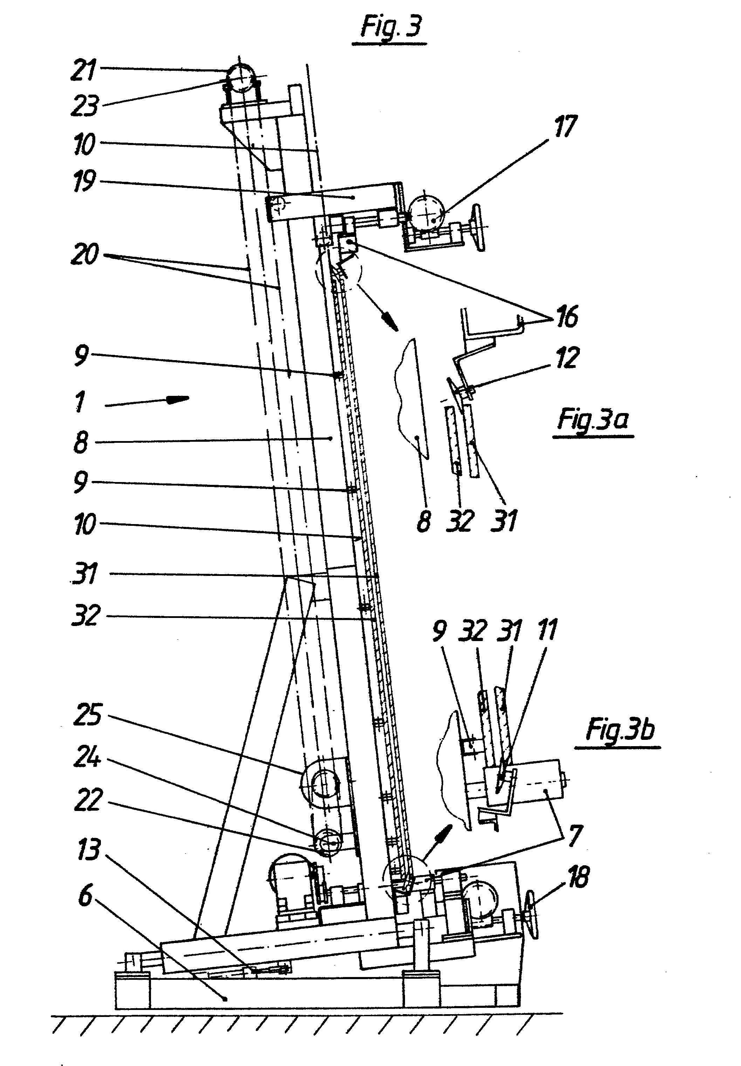

In der Paarungsstation 1 werden Glastafeln 31, 32, welche in Laufrichtung 5 von der Waschmaschine 27 kommend einzeln herangeführt werden, gepaart, d.h. sie werden mit einem vorbestimmten Abstand voneinander zur Deckung gebracht. Zu diesem Zweck ist die Paarungsstation 1 als Waagerechtförderer ausgebildet, welcher am Maschinengestell 6 angebracht einen Aufstellförderer 7, welcher durch eine Zeile von synchron angetriebenen Rollen gebildet ist (Fig. 3), ferner oberhalb des Aufstellförderers 7 ein in einem gestellfesten Rahmen 8 angeordnetes Feld aus freilaufenden Stützrollen 9, die eine Laufebene 10 für die Glastafeln definieren, sowie zwei zum Aufstellförderer 7 parallele Zeilen von kegeligen Stützrollen 11 und 12 umfaßt, welche eine zur Laufebene 10 parallele zweite Ebene definieren. Der Rahmen 8 ist um wenige Grade gegenüber der Lotrechten nach hinten geneigt und dieselbe Neigung hat die Laufebene 10. Die Stützrollen 9 haben annähernd lotrechte, zur Laufebene 10 parallele Achsen. Die Achsen der Rollen 7 des Aufstellförderers verlaufen im rechten Winkel zur Laufebene 10.

Das Gestell 6 mitsamt dem Rahmen 8 ist mittels einer Kolben-Zylinder-Einheit 13 in einer Richtung senkrecht zur Laufebene 10 verschiebbar gelagert. Die unteren Stützrollen 11 stehen mit ihrem oberen Rand ein wenig über die durch die Rollen 7 des Aufstellförderers definierte Aufstellebene vor. Die oberen Stützrollen 12 sind an einem horizontalen Balken 16 angebracht, welcher am Rahmen 8 auf und ab verschieblich angeordnet ist. Der Abstand beider Stützrollenzeilen 11 und 12 von der Laufebene 10 ist durch Verstelleinrichtungen 17 bzw. 18 veränderbar. Der Balken 16 mit der oberen Stützrollenzeile 12 und die zugehörige Verstelleinrichtung 17 sind an einer Traverse 19 befestigt, welche an den beiden seitlichen Pfosten des Rahmens 8 geführt ist. Zum Auf- und Abbewegen der Traverse 19 ist diese an beiden Enden jeweils mit einer Kette 20 verbunden, die nach oben über ein oberes Umlenkzahnrad 21, von dort nach unten über ein unteres Umlenkzahnrad 22 wieder hinauf zur Traverse 19 führt. Die beiden oben angeordneten Umlenkzahnräder 21 sind durch eine Welle 23 und die unteren beiden Umlenkzahnräder 22 durch eine Welle 24 drehfest miteinander verbunden. Die untere Welle 24 wird durch einen Motor 25 angetrieben.

Der Paarungsstation 1 werden die Glastafeln 31, 32 in Laufrichtung 5 zugeführt. Zu diesem Zweck befinden sich beispielsweise vor der Paarungsstation 1 aufeinanderfolgend die Waschmaschine 27 und der Zwischenförderer 28, an welchen die Paarungsstation 1 anschließt. Die Glastafeln durchlaufen stehend die Waschmaschine 27 und gelangen auf den Zwischenförderer 28, von welchem sie an die Paarungsstation 1 übergeben werden. Natürlich haben die Waschmaschine 27, der Zwischenförderer 28 und die Paarungsstation 1 übereinstimmende Laufebenen 10 und ihre Aufstellförderer liegen in gleicher Höhe.

Bevor die erste Glastafel 31 eines Glastafelpaares in die Paarungsstation 1 einläuft, wird letztere durch die Kolben-Zylinder-Einheit 13 in eine Position gebracht, in welcher die durch die Stützrollenzeilen 11 und 12 definierte zweite Ebene mit der Laufebene 10 des Zwischenförderers 28 übereinstimmt. Die erste Glastafel 31 läuft also auf den Rollen 7 stehend und gegen die Stützrollen 11 und 12 gelehnt in die Paarungsstation 1 ein, wo sie in einer vorgegebenen Position angehalten wird, insbesondere mit ihrem vorderen vertikalen Rand gegen einen nicht dargestellten zurückziehbaren Anschlag läuft. Die zweite Glastafel 32, welche mit der ersten Glastafel 31 zur Deckung zu bringen ist, ist inzwischen bis in den Zwischenförderer 28 nachgefolgt. Bevor sie in die Paarungsstation 1 einlaufen kann, wird deren Rahmen 8 durch Betätigen der Kolben-Zylinder-Einheit 13 um ein solches Stück vorgeschoben, daß die durch die Stützrollen 9 definierte Laufebene mit der Laufebene 10 des Zwischenförderers 28 fluchtet (die Laufebene 10 erstreckt sich durch alle Stationen der Zusammenbaulinie). Die in die Paarungsstation 1 einlaufende Glastafel 32 wird mithin durch die am Rahmen 8 angebrachten Stützrollen 9 abgestützt und bewegt sich zwischen diesen Stützrollen 9 und der ersten Glastafel 31 hindurch in Laufrichtung 5 vorwärts, bis sie in derselben Längsposition wie die erste Glastafel 31, zweckmäßigerweise durch denselben Anschlag, angehalten wird. Sie ist nun deckungsgleich mit der ersten Glastafel 31 positioniert (siehe Fig. 1).

Der Vorschub der zweiten Glastafel 32 kann in der Paarungsstation 1 grundsätzlich durch dieselben Rollen 7 erfolgen, auf denen die erste Glastafel 31 steht, da diese durch den Anschlag, gegen welchen sie gelaufen ist, festgehalten werden kann. Zur Vermeidung der dabei auftretenden Reibung der Rollen 7 an der ersten Glastafel 31 kann es jedoch zweckmäßig sein, für die beiden Glastafeln 31 und 32 getrennte, gleichachsig nebeneinanderliegende Antriebsrollen vorzusehen, die beispielsweise durch eine Rutschkupplung miteinander verbunden sein können, wie es die DE-OS 2 820 630 zeigt.

Damit die Stützrollen 11 und 12 auch noch in einen nur geringen Zwischenraum zwischen den beiden Glastafeln 31 und 32 eindringen können, sind sie konisch ausgebildet und ragen – wie es die Fig. 3a und 3b im Detail zeigen – nur wenig in den Zwischenraum zwischen den beiden Glastafeln 31 und 32 hinein, wobei sie die erste Glastafel 31 mit ihrer konischen Lauffläche abstützen.

Es ist ohne weiteres möglich, in der Zusammenbaulinie Isolierglasscheiben unterschiedlicher Formate zusammenzubauen. Folgen Glastafeln unterschiedlicher Höhe aufeinander, so kann ihre Höhe durch Sensoren, die sich beispielsweise im Bereich des Zwischenförderers 28 befinden, festgestellt und die Höhe der Stützrollenzeile 12 vor dem Einlaufen der jeweils ersten Glastafel 31 eines Glastafelpaares in die Paarungsstation 1 in die der gemessenen Höhe entsprechende Höhenlage verfahren werden. Der Zwischenförderer 28 unterscheidet sich in seinem Aufbau von der Paarungsstation darin, daß er die kegeligen Stützrollen 11 und 12 und deren Halterungen nicht enthält und daß sein Rahmen 8 nicht quer verschieblich gelagert ist.

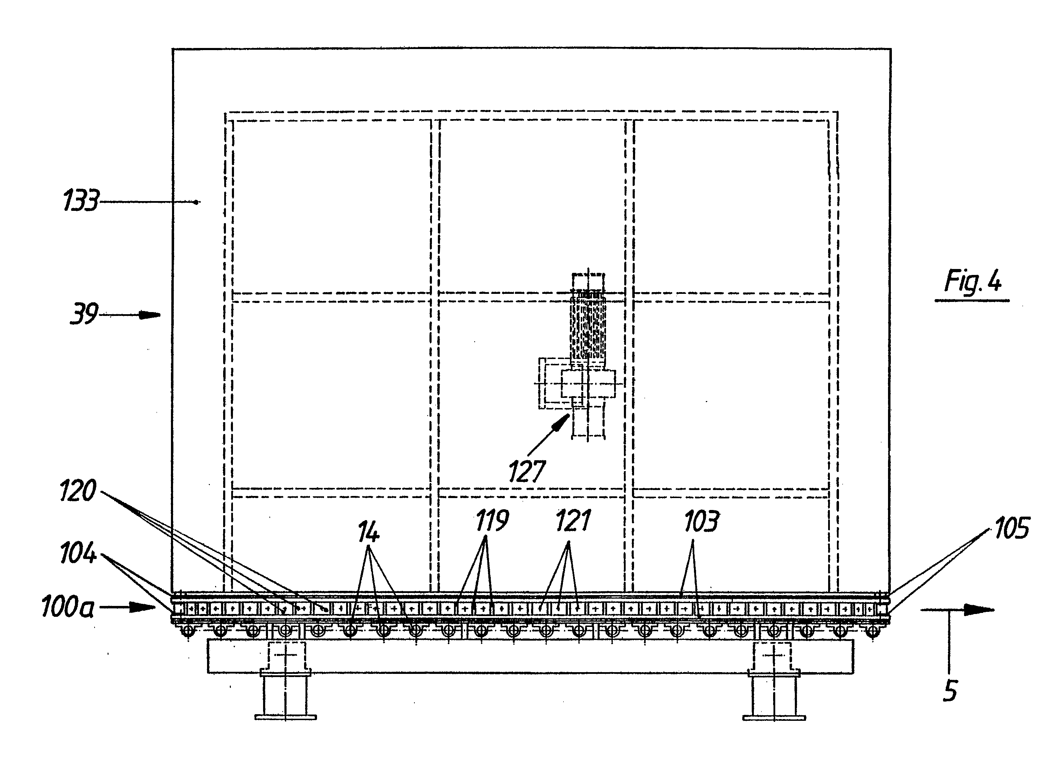

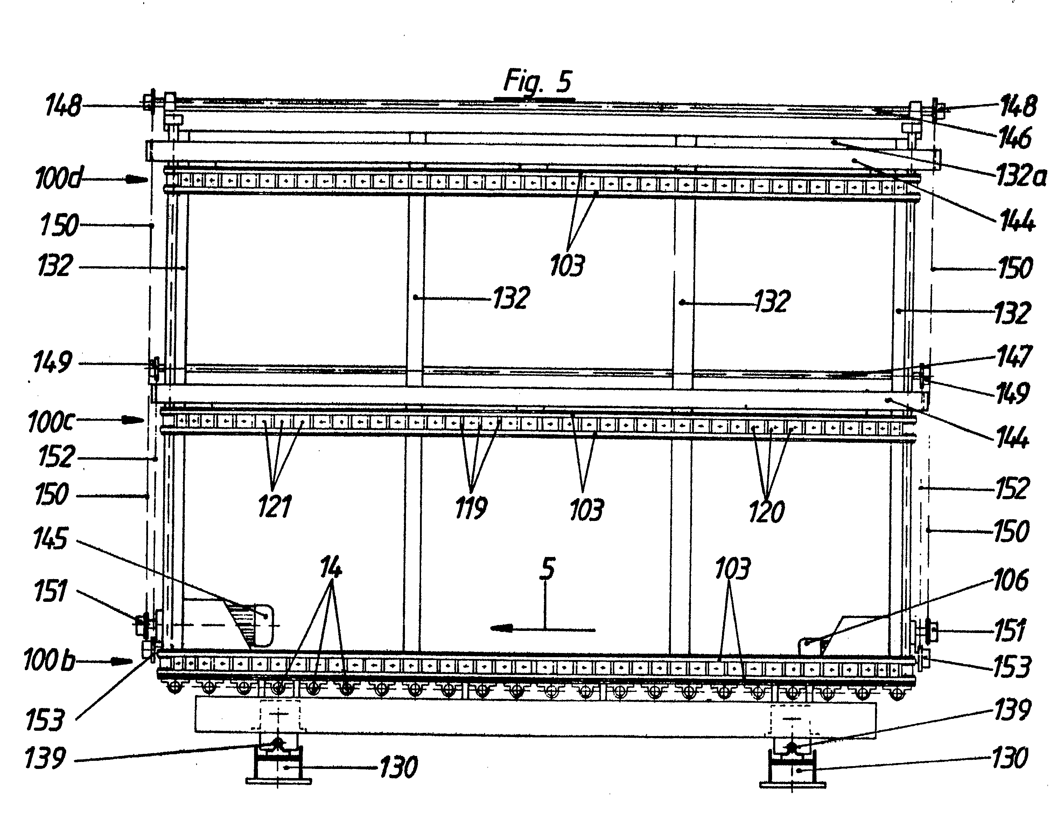

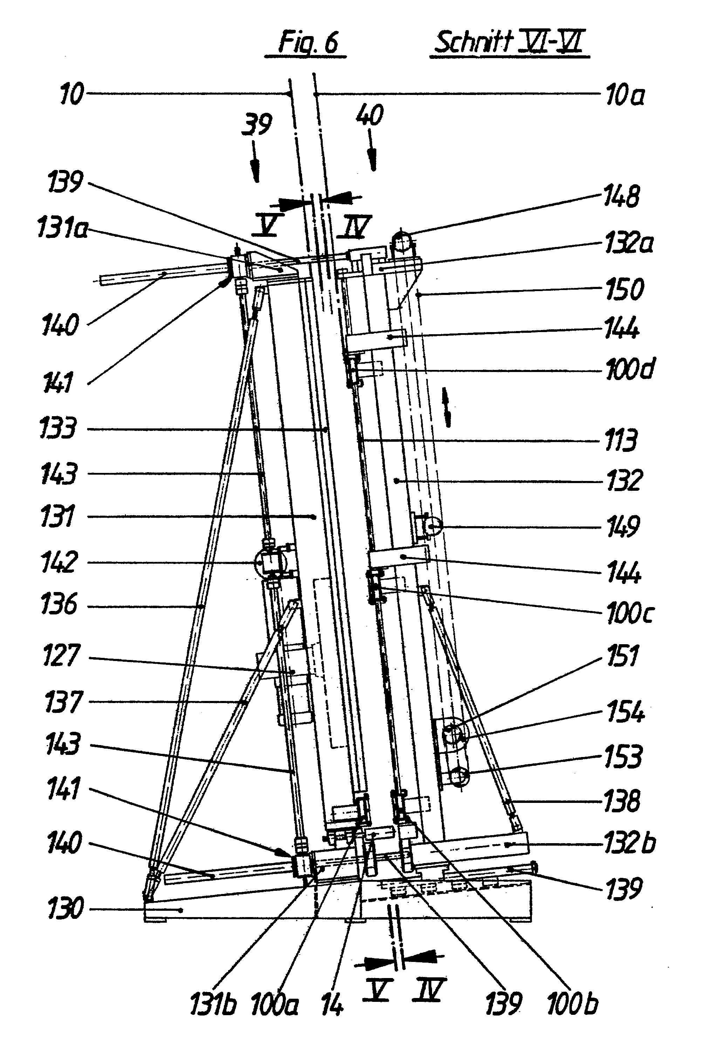

Die auf die Paarungsstation 1 folgende Versiegelungsstation 2 besteht in Laufrichtung 5 hintereinander aus zwei Teilstationen 2a und 2b (Fig. 1). Die erste Teilstation 2a enthält einen aus einer waagerechten Zeile von synchron antreibbaren Rollen 14 gebildeten Aufstellförderer; die Rollen 14 sind höhengleich mit den Rollen 7 in der Paarungsstation 1 angeordnet. Oberhalb der Rollen 14 sind einander gegenüberliegende Saugförderer 100 angeordnet. In jenem Teil 39 des Abschnitts 2a der Versiegelungsstation, welcher in der Darstellung gemäß Fig. 6 auf der linken Seite der Laufebene (nachfolgend auch als die hintere Laufebene bezeichnet) angeordnet und in Fig. 4 in der Voransicht dargestellt ist, befindet sich nur ein Saugförderer 100a dicht oberhalb der Rollen 14; in dem Teil 40 des Abschnitts 2a der Versiegelungsstation, welcher in der Darstellung gemäß Fig. 6 auf der rechten Seite angeordnet und in Fig. 5 dargestellt ist, befinden sich übereinander und parallel zueinander drei solche Saugförderer 100b, 100c, 100d, welche eine gemeinsame Tangentialebene 10b haben, die eine zur Laufebene 10 parallele zweite Laufebene 10a darstellt, welche nachstehend auch als die vordere Laufebene bezeichnet wird. In der hinteren Laufebene 10 läuft jeweils die Glastafel 32 mit ihrer Außenseite, in der vorderen Laufebene 10a läuft jeweils die Glastafel 31 mit ihrer Außenseite.

Die vier Saugförderer 100a bis 100d haben den nachstehend beschriebenen, übereinstimmenden Aufbau.

Ein jeder Saugförderer 100 hat als tragendes Element einen langgestreckten Hohlprofilbalken 101, welcher an seinen beiden Enden geschlossen und über an seiner Rückseite angesetzte Rohrstutzen 102 mit der Saugseite eines Gebläses 107 verbunden ist. Auf der Vorderseite des Hohlprofilbalkens 101 ist eine Platte 108 aufgeschweisst, welche sich über die volle Länge des Hohlprofilbalkens erstreckt und beidseitig ein wenig übersteht. Im überstehenden Bereich der Platte 108 befinden sich beidseits des Hohlprofilbalkens 101 zwei flache Nuten 109, in welchen zwei endlose Riemen 103 angeordnet sind, welche um je zwei Umlenkrollen 104 und 105 an den Enden des Hohlprofilbalkens 101 herumgeführt sind. Die Umlenkrollen 104 und 105 sind am Hohlprofilbalken 101 oder an Halterungen angebracht, welche mit dem Hohlprofilbalken fest verbunden sind. Sie sind so angeordnet, daß das Arbeitstrum 103a der Riemen parallel zur Vorderseite der Platte 108 verläuft und geringfügig – vorzugsweise zwischen 0,5 mm und 1 mm – über die Vorderseite der Platte 108 vorsteht. Die Vorderseiten der Arbeitstrums 103a der beiden Riemen definieren gemeinsam die jeweilige Laufebene 10 bzw. 10a.

Um die beiden Riemen 103 unabhängig voneinander spannen zu können, sind die beiden am einen Ende des Hohlprofilbalkens 101 angeordneten Umlenkrollen 104 nicht auf einer gemeinsamen, sondern auf getrennten Wellen gelagert und in Längsrichtung des Hohlprofilbalkens verstellbar. Die am gegenüberliegenden Ende des Hohlprofilbalkens 101 gelagerten Umlenkrollen 105 hingegen sind nicht in Längsrichtung des Hohlprofilbalkens 101 verstellbar gelagert; sie werden durch einen Motor 106 synchron angetrieben und sind zu diesem Zweck auf einer gemeinsamen Keilwelle 113 gelagert.

Der Hohlprofilbalken 101 trägt auf seiner Vorderseite einen zur Laufebene 10 bzw. 10a hin offenen Unterdruckkanal 115, welcher dadurch gebildet ist, daß entlang der beiden Längsseiten der Platte 108 von dieser zwei niedrige Seitenwände 116 gegen die Laufebene 10 bzw. 10a gerichtet vorstehen; die Höhe dieser Seitenwände beträgt zwischen 5 mm und 10 mm. Die Riemen 103 stehen mit ihrem Arbeitstrum 103a jedoch noch geringfügig über die Seitenwände 116 vor, nämlich um ungefähr 0,5 bis 0,8 mm. Der längsseits durch die Seitenwände 116 abgegrenzte Unterdruckkanal 115 ist quer zur Laufrichtung 5 durch Stege 119 unterteilt, deren Vorderseite in einer gemeinsamen Ebene mit der Vorderseite der Seitenwände 116 liegt. In der Mitte einer jeden durch die Stege 119 und die Seitenwände 116 abgegrenzten Kammer 120 ist eine Saugöffnung 121 vorgesehen, welche die jeweilige Kammer 120 mit dem Innenraum 122 des Hohlprofilbalkens 101 verbindet, aus welchem die Luft durch die Rohrstutzen 102 abgesaugt wird. Der Innenraum 122 des Hohlprofilbalkens stellt deshalb eine Unterdruckquelle für die auf der Vorderseite der Platte 108 gebildeten Kammern 120 dar, die deshalb als Unterdruckkammern bezeichnet werden und in ihrer Gesamtheit den erfindungsgemäßen Unterdruckkanal 115 bilden.

Eine in ihrer Laufebene 10 bzw. 10a bewegte Glastafel 32 bzw. 31 liegt am Arbeitstrum 103a der beiden Riemen an und wird durch den sich zwischen der Glastafel 31 bzw. 32 und der Platte 108 rasch aufbauenden Unterdruck angesaugt, so daß sie schlupffrei gefördert werden kann. Die Unterdruckkammern 120 werden dazu zweckmäßigerweise so bemessen, daß mehrere von ihnen durch eine Glastafel 31 bzw. 32 abgedeckt werden. Für das Fördern von Glastafeln eignen sich beispielsweise Fördervorrichtungen, deren Unterdruckkammern durch 15 cm bis 20 cm lange Querstege 119 begrenzt sind, die im mittleren Bereich des Saugförderers einen Abstand von 15 cm bis 20 cm aufweisen, an den beiden Enden des Hohlprofilbalkens 101 jedoch nur noch einen Abstand von 5 cm bis 10 cm haben, um auch am Beginn und am Ende des Saugförderers einen schlupffreien Transport gewährleisten zu können.

Die quer verlaufenden Stege 119 gewährleisten, daß wenigstens in den mittleren der durch eine Glastafel 31 bzw. 32 abgedeckten Unterdruckkammern 120 ein Unterdruck in der gewünschten und erforderlichen Höhe aufrecht erhalten werden kann, während die längs verlaufenden Seitenwände 116, welche in einem nur geringen Abstand von der anliegenden Glastafel 31 bzw. 32 enden, dafür sorgen, daß nur wenig Luft von den Längsseiten her in die durch eine Glastafel abgedeckten Unterdruckkammern 120 einströmen kann.

Das Arbeitstrum 103a der Riemen kann sich rückseitig am Grund der Nuten 109 abstützen, wie es in der älteren, aber nicht vorveröffentlichten deutschen Patentanmeldung P 35 29 892.8 beschrieben ist. Ein reibungsärmerer Lauf der Riemen läßt sich hingegen erreichen, wenn man das Arbeitstrum 103a rückseitig auf einer dichten Folge von Rollen lagert, wie es in der europäischen Patentanmeldung Nr. 86 111 304.1 beschrieben ist, worauf hiermit Bezug genommen wird.

Der hintere Teil 39 und der vordere Teil 40 des ersten Abschnitts 2a der Versiegelungsstation sind auf einem gemeinsamen Gestell 130 angeordnet. Der hintere Teil 3 hat einen rechteckigen Rahmen 131, an dessen unterer, waagerechter Traverse die Rollen 14 des Aufstellförderers und dicht darüber der eine Saugförderer 100a gelagert sind. Oberhalb des Saugförderers 100a ist eine Luftkissenwand 133 angeordnet; es handelt sich dabei um eine ebene Wand, welche über ihre Vorderseite verteilt Luftaustrittsöffnungen 134 hat, die mit einer in der Wand ausgebildeten Hohlschicht 135 Verbindung haben. In die Hohlschicht 135 wird durch das Gebläse 127 Luft eingeblasen, welche durch die Luftaustrittsöffnungen 134 wieder austritt. Die Vorderseite der Luftkissenwand 133 fällt mit der hinteren Laufebene 10 zusammen oder ist nur geringfügig hinter diese zurückversetzt angeordnet. Der Rahmen 131 samt Luftkissenwand 133 und Saugförderer 100a ist um wenige Grad gegen die Vertikale nach hinten geneigt angeordnet und mittels Streben 136 und 137 am Gestell 130 abgestützt.

Der gegenüberliegende Teil 40 des Abschnitts 2a der Versiegelungsstation enthält ebenfalls einen rechteckigen Rahmen 132, welcher dieselbe geringe Neigung gegen die Vertikale hat und durch Streben 138 abgestützt ist. Der Rahmen 132 ist zur Veränderung seines Abstandes vom Rahmen 131 parallel zu sich selbst verschiebbar auf Führungsstangen 139 des Gestells 130 gelagert. Zur Parallelführung des Rahmens 132 sind an dessen oberer Traverse 132a und unterer Traverse 132b vier Spindeln 139 befestigt, welche sich rechtwinklig zu den Laufebenen 10 und 10a in Hülsen 140 hinein erstrecken, welche an der Rückseite der oberen Traverse 131a und unteren Traverse 131b des Rahmens 131 angebracht sind. Die Spindeln 139 durchsetzen dabei am Rahmen 131 gelagerte Spindelmuttern 141, welche durch einen Motor 142 synchron antreibbar und zu diesem Zweck durch Getriebeelemente mechanisch mit dem Motor 142 verbunden sind. Von den Getriebeelementen sind zwei Antriebswellen 143 in Fig. 6 dargestellt.

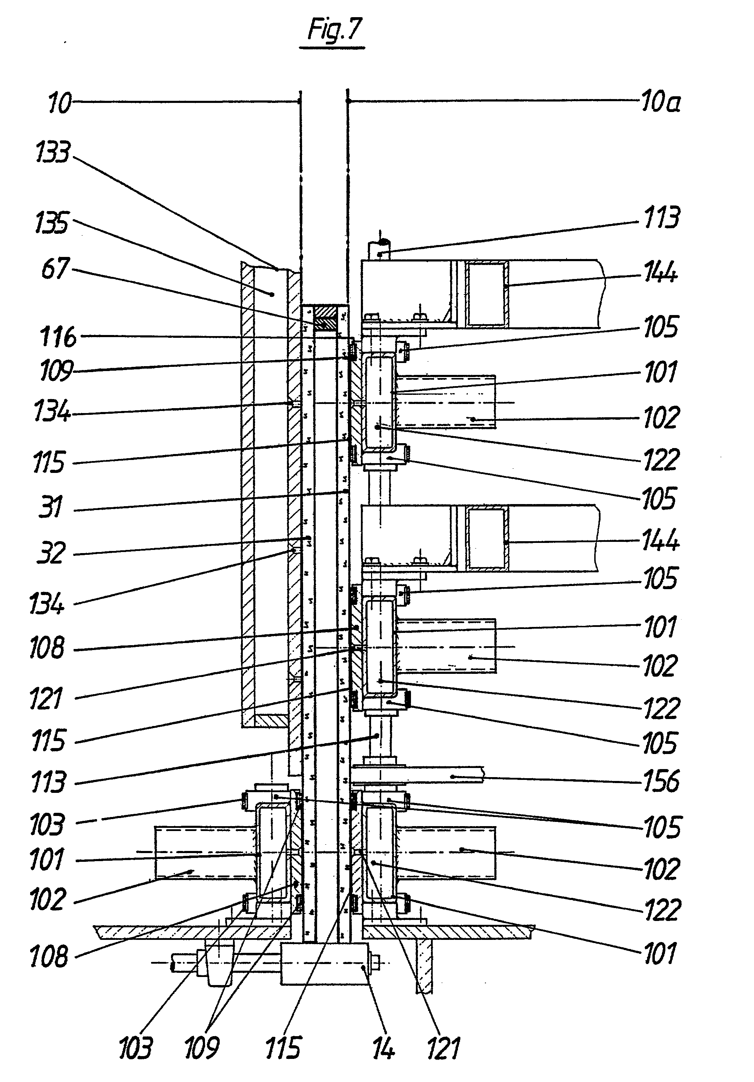

Wie die Fig. 5 bis 7 zeigen, ist der Abstand der drei im Rahmen 132 gelagerten Saugförderer 100b, 100c und 100d veränderbar. Der untere Saugförderer 100b ist in seiner Höhenlage nicht veränderbar, er liegt stets dem Saugförderer 100a im Rahmen 131 direkt gegenüber. Die beiden oberen Saugförderer 100c und 100d hingegen sind an waagerechten Traversen 144 befestigt, welche parallel zur Laufebene 10a an seitlichen Teilen des Rahmens 132 geführt auf und ab verschiebbar sind. Zu diesem Zweck ist auf der oberen Traverse 132a des Rahmens eine erste Welle 146 und in etwas mehr als halber Höhe des Rahmens eine zweite Welle 147 gelagert; diese beiden Wellen tragen an ihren Enden Zahnräder 148 bzw. 149. Über die oberen Zahnräder 146 sind endlose Ketten 150 gelegt, die um im unteren Bereich des Rahmens 132 befindliche, gleichachsige Zahnräder 151 herumgeführt sind, von denen eines direkt vom Motor 145 angetrieben ist. Um die mittleren Zahnräder 149 sind ebenfalls zwei endlose Ketten 152 herumgelegt, welche um zwei im unteren Rahmenbereich gleichachsig angeordnete Zahnräder 153 herumgeführt sind, von denen eines über eine Zwischenkette 154 durch den Motor 145 angetrieben ist. Die Übersetzungsverhältnisse sind so gewählt, daß bei der Höhenverstellung der Saugförderer der obere Saugförderer 100d stets den doppelten Weg wie der mittlere Saugförderer 100c zurücklegt, so daß in jeder Stellung der mittlere Saugförderer 100c sich in der Mitte zwischen dem oberen Saugförderer 100d und dem unteren Saugförderer 100b befindet. Die Fig. 5 zeigt die Saugförderer in ihrer Stellung mit größtem Abstand zueinander, die Fig. 7 zeigt sie mit geringem Abstand zueinander.

Um die Riemen 103 der drei Saugförderer 100b, 100c, 100d synchron antreiben zu können, befinden sich ihre angetriebenen Umlenkrollen 105 auf einer gemeinsamen, durchgehenden Keilwelle 113, welche im gezeichneten Beispiel durch einen Keilriemen 156 vom Motor 106 angetrieben wird.

Der zweite Abschnitt 2b der Versiegelungsstation hat einen ganz ähnlichen Aufbau wie der erste Abschnitt 2a, so daß gleiche und einander entsprechende Bauteile mit übereinstimmenden Bezugszahlen bezeichnet sind. Der Unterschied zwischen dem ersten Abschnitt 2a und dem zweiten Abschnitt 2b besteht lediglich darin, daß im zweiten Abschnitt die Rollen 14a des Aufstellförderers absenkbar angeordnet sind.

Die Abnahmestation 84 hat im Aufbau ebenfalls viele Ähnlichkeiten mit dem ersten Abschnitt 2a der Versiegelungsstation. Deshalb sind gleiche und einander entsprechende Bauteile mit übereinstimmenden Bezugszahlen bezeichnet. Der Unterschied zwischen der Abnahmestation 84 und dem ersten Abschnitt 2a der Versiegelungsstation besteht darin, daß in der Abnahmestation 84 kein Aufstellförderer vorgesehen ist. Vielmehr befinden sich anstelle der Rollen 14 an der unteren Rahmentraverse 132b rechtwinklig zur Laufebene 10 gerichtete Stifte 85, deren Oberseite etwas tiefer liegt als die durch die Rollen 14 und 14a in der Versiegelungsstation bestimmte Aufstellebene für die Glastafeln 31 und 32, so daß diese in der Abnahmestation 84 mit entsprechendem Abstand über die Stifte 85 hinweggefördert werden, deren Aufgabe nur darin besteht, die Glastafeln 31, 32 aufzufangen, falls diese infolge einer Betriebsstörung einmal von den Saugförderern 100 abfallen sollten.

Ein weiterer Unterschied zwischen der Abnahmestation 84 und dem ersten Abschnitt 2a der Versiegelungsstation besteht darin, daß drei abstandsveränderlich übereinander angeordnete Saugförderer 100b, 100c, 100d, welche in der Versiegelungsstation im vorderen Teil 40 der Station vorgesehen sind, in der Abnahmestation 84 stattdessen im hinteren Teil 87 der Vorrichtung vorgesehen sind. Dabei sind die Anordnung und die Verfahrbarkeit der drei Saugförderer 100b, 100c und 100d genauso gelöst, wie in der Versiegelungsstation in den Abschnitten 2a und 2b. Der Rahmen 132, in welchem die drei Saugförderer gelagert sind, ist in der Abnahmestation 84 jedoch nicht quer zur Laufrichtung 5 parallel zu sich selbst verschiebbar. Dem unteren Saugförderer 100b liegt in der Abnahmestation 84 ein Saugförderer 100a unmittelbar parallel gegenüber und ist mittels einer Verstellvorrichtung 88, welche von Hand (wie gezeichnet) oder motorisch betätigt werden kann, parallel zu sich selbst auf einer horizontalen, gestellfesten Traverse 89 quer zur Laufebene 10 verschiebbar gelagert, so daß der Abstand zwischen den beiden Saugförderern 100a und 100b verstellt werden kann. Im Gegensatz zur Versiegelungsstation 2a, 2b befindet sich in der Abnahmestation oberhalb des Saugförderers 100a keine Luftkissenwand, vielmehr ist die aus den Glastafeln 31 und 32 gebildete Isolierglasscheibe – abgesehen von ihrer teilweisen Abdeckung durch den einen Saugförderer 100a längs ihres unteren Randes – zur Entnahme frei zugänglich.

Am auslaufseitigen Ende des ersten Abschnittes 2a der Versiegelungsstation ist eine Vorrichtung 33 für das Antreiben, Führen und Betätigen einer Düse 36 vorgesehen, welche auf einem Schlitten 34 angebracht und mit diesem in einem Zwischenraum zwischen den beiden Abschnitten 2a und 2b der Versiegelungsstation längs einer Bewegungsbahn 35 auf und ab verschiebbar ist, welche senkrecht zur Laufrichtung 5 parallel zu den Laufebenen 10 und 10a verläuft. Auf diesem Schlitten 34 ist die Düse 36 um eine zu den Laufebenen 10 und 10a senkrechte Achse 37 um jeweils 90° fortschreitend verschwenkbar angeordnet.

Nachstehend wird die Arbeitsweise der in den Figuren 1 bis 8 dargestellten Zusammenbaulinie beschrieben. Der Ablauf bis zum Positionieren von zwei Glastafeln 31 und 32 deckungsgleich auf Abstand in der Paarungsstation 1 wurde weiter vorne bereits beschrieben, so daß die nachfolgende Beschreibung ihren Ausgangspunkt in jener Phase des Zusammenbaus nehmen kann, in welcher die beiden zu einer Isolierglasscheibe zusammenzubauenden Glastafeln 31, 32 in der Paarungsstation 1 bereits deckungsgleich auf Abstand gebracht sind, wie das in Fig. 1 in der Draufsicht auf die Paarungsstation zu sehen ist. Die beiden so in der Paarungsstation 1 positionierten Glastafeln 31 und 32 werden gemeinsam durch den Abschnitt 2a der Versiegelungsstation hindurch in den Abschnitt 2b der Versiegelungsstation überführt, wobei sie beide auf den Rollen 14 und 14a der beiden Aufstellförderer in diesen beiden Abschnitten 2a und 2b stehen. Die hintere Glastafel 32 liegt dabei den Riemen 103 des hinteren Saugförderers 100a an und stützt sich im Bereich oberhalb dieses Saugförderers an der Luftkissenwand 133 ab. Die vordere Glastafel 31 hingegen wird von der Paarungsstation in der Flucht der vorderen Laufebene 10a in die Versiegelungsstation überführt und gelangt deshalb zur Anlage an den drei Saugförderern 100b, 100c und 100d, welche die Glastafel 31 in der Nähe ihres unteren Randes, ungefähr in ihrer Mitte und in der Nähe ihres oberen Randes ansaugen. Beide Glastafeln 31 und 32 haften infolge des sich zwischen ihnen und dem jeweiligen Unterdruckkanal 115 aufbauenden Unterdrucks an den Riemen 103, welche in vorgegebenem, einstellbarem Abstand synchron angetrieben sind und deshalb für ein synchrones, schlupffreies Fördern der beiden Glastafeln sorgen. Wechselnde Höhen der Glastafeln 31 und 32 können durch Sensoren bereits vor dem Einlauf in die Paarungsstation 1, beispielsweise im Bereich des Zwischenförderers 28, ermittelt und die Höhe der oberen Stützrollen 12 in der Paarungsstation 1 und der oberen Saugförderer 100c und 100d in der Versiegelungsstation, sowie in der Abnahmestation 84 entsprechend eingestellt werden.

Nachdem ein Glastafelpaar 31, 32 die Paarungsstation 1 verlassen hat, kann diese quer zur Laufrichtung 5 in ihre Ausgangslage zurückbewegt werden, so daß dort die erste Glastafel 31 des nächsten Glastafelpaares aus dem Zwischenförderer 28 kommend gegen die Stützrollen 11 und 12 gelehnt einlaufen kann.

In der Versiegelungsstation werden die Glastafeln 31 und 32 bis in eine Position vorbewegt und dann angehalten, in welcher sie mit ihrem hinteren, von oben nach unten verlaufenden Rand im Zwischenraum zwischen den beiden Abschnitten 2a und 2b der Versiegelungsstation liegen, in welchem die Bewegungsbahn 35 der einen Düse 36 liegt. In dieser Lage wird durch die Vorrichtung 33 die Düse 36 an die hintere untere Ecke der Glastafeln 31 und 32 herangeführt, taucht in deren Zwischenraum ein und fährt am hinteren Rand der Glastafeln 31 und 32 hoch bis zur hinteren oberen Ecke und erzeugt dabei von unten nach oben fortschreitend einen Strang aus zunächst pastöser Masse zwischen den beiden Glastafeln 31 und 32. Bei Erreichen der oberen, hinteren Ecke wird die Aufwärtsbewegung der Düse 36 gestoppt und diese im Uhrzeigersinn um 90° geschwenkt. Der Haltebefehl für den Düsenantrieb kann von einem Sensor gegeben werden, welcher der Düse 36 in vorbestimmtem Abstand vorauseilt und auf die Lage der Glastafeln 31, 32 anspricht. Es ist aber auch möglich, die Düse aufgrund vorangegangener Messungen des Glastafelformates mittels Weggebern zu steuern. Hat die Düse 36 ihre Schwenkbewegung vollendet, was beispielsweise durch einen Endschalter gemeldet werden kann, dann wird das Glastafelpaar 31 und 32 entgegen der Laufrichtung 5 zurückbewegt in den ersten Abschnitt 2a der Versiegelungsstation und dort in einer Position angehalten, in welcher die Glastafeln mit ihrem vorderen Rand im Zwischenraum zwischen den beiden Abschnitten 2a und 2b der Versiegelungsstation liegen. Diese Lage der Glastafeln ist in Fig. 1 zu sehen. Während dieses Zurückbewegens der beiden Glastafeln 31 und 32 wird durch die ruhende Düse 36 längs des oberen Randes der Glastafeln in den Zwischenraum zwischen ihnen ein Strang 67 aus der pastösen Masse eingespritzt. Die Lage der Düse 36 und die Zurückbewegung der Glastafeln 31 und 32 sind so aufeinander abgestimmt, daß die Glastafeln – wie in Fig. 1 dargestellt – durch Stillsetzen der Rollen 14 und der Saugförderer 100 angehalten werden, wenn die Düse 36 die vordere, obere Ecke des Glastafelpaares erreicht hat. Bei ruhendem Glastafelpaar 31, 32 wird nunmehr die Düse 36 ein weiteres Mal im Uhrzeigersinn um 90° geschwenkt und fährt dann entlang des vorderen Randes des Glastafelpaares abwärts (diese Phase ist in Fig. 1 dargestellt), bis es die untere, vordere Ecke des Glastafelpaares erreicht.

Bei noch immer ruhendem Glastafelpaar 31, 32 wird die Düse 36 ein weiteres Mal um 90° im Uhrzeigersinn verschwenkt und ist dann dem unteren Rand des Glastafelpaares zugewandt; gleichzeitig werden die Rollen 14a des Aufstellförderers im zweiten Abschnitt 2b der Versiegelungsstation ein Stück weit abgesenkt. Anschließend wird das Glastafelpaar 31, 32 in Laufrichtung 5 vorbewegt unter gleichzeitigem Einspritzen der pastösen Masse in den Zwischenraum längs des unteren Randes der Glastafeln 31, 32, welche dabei erneut in den zweiten Abschnitt 2b der Versiegelungsstation einlaufen und dort von den vier Saugförderern 100a bis 100d übernommen werden, jedoch durch die Rollen 14a nicht mehr abgestützt, sondern nunmehr an allen vier Rändern völlig frei sind. Die Glastafeln 31, 32 können ohne Halt auf voller Länge in den zweiten Abschnitt 2b der Versiegelungsstation hineinlaufen, da mit dem Erreichen der hinteren, unteren Ecke durch die Düse 36 der Versiegelungsvorgang beendet und die Düse automatisch geschlossen wird. Die Düse wird nun ein weiteres Mal um 90° im Uhrzeigersinn gedreht und ist nunmehr bereit, zum Versiegeln des nächsten Glastafelpaares, welches inzwischen in den ersten Abschnitt 2a der Versiegelungsstation einlaufen konnte.

Die aus den Glastafeln 31 und 32 gebildete versiegelte Isolierglasscheibe wird vom zweiten Abschnitt 2b der Versiegelungsstation zügig in die Abnahmestation 84 weitergefördert und dort gestoppt in einer Lage, die in Fig. 1 dargestellt ist. Gleichzeitig kann das nachfolgende Glastafelpaar in den zweiten Abschnitt 2b der Versiegelungsstation einlaufen und dort die Versiegelung längs seines hinteren Randes begonnen werden. Die fertige Isolierglasscheibe kann währenddessen aus der Abnahmestation 84 herausgehoben und zu ihrem Lagerplatz gebracht werden. Das Herausheben der Isolierglasscheibe aus der Abnahmestation 84 kann mittels eines Saughebegerätes erfolgen, welches auf die vorn liegende Außenseite der Glastafeln 31 aufgesetzt wird. Sobald das Saughebegerät die Isolierglasscheibe erfasst hat, kann man die Saugförderer 100a bis 100d in der Abnahmestation 84 von ihrer Unterdruckquelle trennen, zum Beispiel durch Abschalten des Gebläses 107 oder durch Öffnen eines besonderen Belüftungsventils, so daß die Saugförderer 100a bis 100d die fertige Isolierglasscheibe freigeben. Um das Herausheben der Isolierglasscheibe zu erleichtern, kann man den vorderen Saugförderer 100a von den hinteren Saugförderern 100b bis 100d entfernen. Ein für das Abnehmen der fertigen Isolierglasscheiben geeignetes Saughebegerät ist in dem älteren, aber nicht vorveröffentlichten deutschen Gebrauchsmuster 8 526 920 beschrieben.

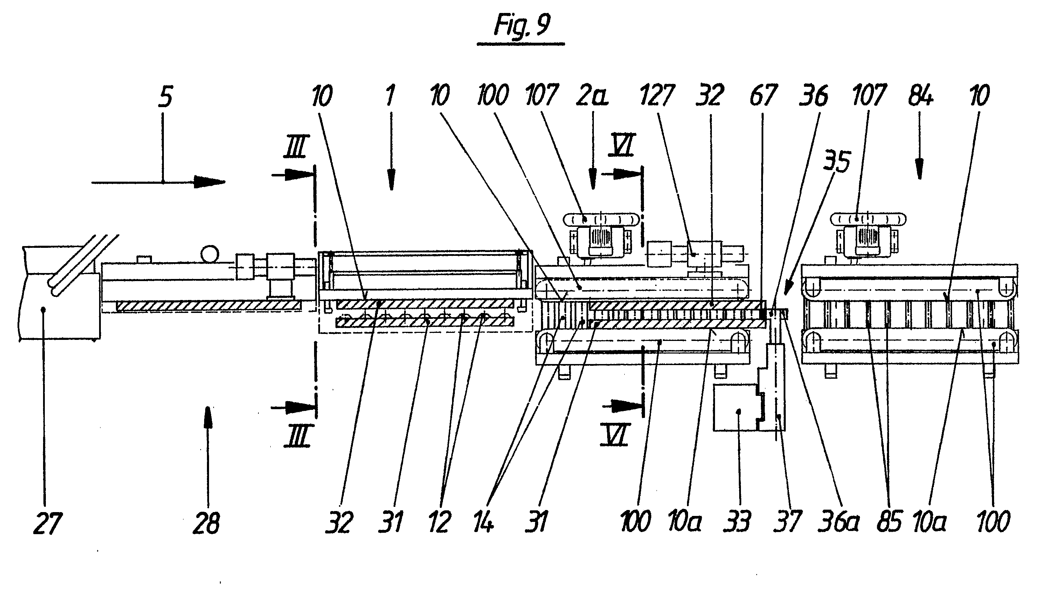

Die Fig. 9 zeigt den Aufbau einer Zusammenbaulinie für Isolierglas, welche mit zwei Düsen arbeitet. Der Aufbau der Zusammenbaulinie entspricht weitgehend dem Aufbau der vorstehend beschriebenen Zusammenbaulinie, welche mit nur einer Düse arbeitet. Gleiche oder einander entsprechende Teile sind deshalb mit übereinstimmenden Bezugszahlen bezeichnet und werden nachstehend nicht noch einmal detailliert beschrieben. Die dargestellten Zusammenbaulinien für eine und für zwei Düsen stimmen in der Waschmaschine 27, im Zwischenförderer 28, in der Paarungsstation 1 und im ersten Abschnitt 2a der Versiegelungsstation vollständig überein. Der in der mit nur einer Düse arbeitenden Zusammenbaulinie vorgesehene zweite Abschnitt 2b der Versiegelungsstation ist in der mit zwei Düsen arbeitenden Zusammenbaulinie nicht vorhanden. An seine Stelle ist eine Abnahmestation 84 getreten, welche mit der Abnahmestation 84 in der mit nur einer Düse arbeitenden Zusammenbaulinie übereinstimmt.

Von den beiden Düsen der zweiten Zusammenbaulinie ist eine Düse 36 in gleicher Weise aufgebaut, angeordnet und bewegbar wie die eine Düse 36 in der ersten Zusammenbaulinie; diese eine Düse 36 dient jedoch in der mit zwei Düsen arbeitenden Zusammenbaulinie nur zum Versiegeln der Isolierglasscheiben längs ihres vorderen, oberen und hinteren Randes. Zum Versiegeln des unteren Randes der Isolierglasscheiben ist eine weitere Düse 36a vorgesehen, welche jedoch nur begrenzt auf und ab parallel zur Laufebene 10 verschiebbar ist, nämlich aus einer Ruhelage unterhalb der Aufstellebene des durch die Rollen 14 gebildeten Aufstellförderers in eine Arbeitsposition, in welcher die Düse 36a um jenes Maß, um welches sie in den Zwischenraum zwischen den Glastafeln 31, 32 eintauchen soll, über die durch die Rollen 14 definierte Aufstellebene hinausragt. Da die zweite Düse 36a unter der ersten Düse 36 liegt, ist sie in der Draufsicht gemäß Fig. 9 durch die obere Düse 36 weitgehend verdeckt.

Der Zusammenbau einer Isolierglasscheibe läuft folgendermaßen ab: das deckungsgleiche Positionieren der beiden Glastafeln 31 und 32 mit Abstand zueinander erfolgt genauso wie in der ersten Zusammenbaulinie, so daß darauf Bezug genommen werden kann. Die mit Abstand deckungsgleich positionierten Glastafeln 31 und 32 werden gemeinsam von der Paarungsstation 1 in den nachfolgenden Abschnitt 2a der Versiegelungsstation überführt und dort auf den Rollen 14 stehend bis in eine vorbestimmte Endlage bewegt, in welcher sich der vordere Rand der beiden Glastafeln 31 und 32 etwas über das Ende des Abschnittes 2a überstehend im Zwischenraum zwischen diesem Abschnitt 2a und der Abnahmestation 84 befindet; diese Position ist in Fig. 9 dargestellt. Die hintere Glastafel liegt dabei an dem hinteren Saugförderer 100a und gegebenenfalls an der darüber angeordneten Luftkissenwand 133 an, die vordere Glastafel 31 hingegen liegt an den vorderen Saugförderern 100b, 100c und 100d an. Beide Glastafeln 31 und 32 werden durch den Kraftschluß mit den Saugförderern 100 schlupffrei gefördert und in gleichbleibendem, vorwählbarem Abstand gehalten.

In der in Fig. 9 dargestellten Position wird die obere Düse 36 im Bereich der vorderen, unteren Ecke der Glastafeln in deren Zwischenraum eingeführt und dann entlang ihrer Bewegungsbahn 35 nach oben geführt, wobei sie längs des vorderen Randes des Glastafelpaares einen Strang 67 aus pastösem Material einspritzt. Gleichzeitig wird in der Paarungsstation 1 der Rahmen 8 zurückbewegt, so daß dort die erste Glastafel des nächsten Glastafelpaares gegen die Stützrollenzeilen 11 und 12 gelehnt einlaufen kann. In demselben Zeitraum wird die untere Düse 36a aus ihrer Ruhestellung nach oben bewegt und taucht im Bereich der unteren, vorderen Ecke des Glastafelpaares 31, 32 in den zwischen ihnen gebildeten Zwischenraum ein.

Sobald die obere Düse 36 die obere Ecke des Glastafelpaares 31, 32 erreicht hat, wird ihre Bewegung gestoppt und sie wird um 90° entgegen dem Uhrzeigersinn verschwenkt, wobei während der Schwenkbewegung der Austritt der pastösen Masse zweckmäßigerweise unterbrochen ist, um ein Überfüllen der Randfuge im Eckenbereich zu verhindern. Nach Beendigung der Schwenkbewegung der oberen Düse 36 wird das Glastafelpaar 31, 32 durch die Saugförderer 100 und die Rollen 14 im Abschnitt 2a der Versiegelungsstation in Laufrichtung 5 weiterbewegt und in die anschließende Abnahmestation 84 übergeben, in welcher die beiden Glastafeln 31 und 32 von den dort vorgesehenen Saugförderern 100a bis 100d übernommen und ausschließlich von diesen gehalten und gefördert werden. Stützrollen 14 wie im ersten Abschnitt 2a der Versiegelungsstation sind in der Abnahmestation 84 nicht vorgesehen, dort befinden sich an deren Stelle die Stifte 85 in einem Abstand vom unteren Rand der Glastafeln 31 und 32. Während der Vorschubbewegung der Glastafeln vom Abschnitt 2a in die Abnahmestation 84 wird durch die beiden Düsen 36 und 36a gleichzeitig pastöses Material längs des oberen und unteren Randes des Glastafelpaares 31, 32 in den zwischen ihnen gebildeten Zwischenraum eingespritzt. Haben die beiden Düsen 36 und 36a die beiden hinteren Ecken des Glastafelpaares 31, 32 erreicht, wird das Glastafelpaar durch Stoppen des Antriebs der Saugförderer 100a bis 100d in der Abnahmestation 84 stillgesetzt und gleichzeitig die Zufuhr der pastösen Masse zu den beiden Düsen 36, 36a unterbrochen. Die obere Düse 36 wird ein weiteres Mal entgegen dem Uhrzeigersinn um 90° verschwenkt und beginnt, entlang des hinteren Randes der Glastafeln 31, 32 herabzufahren und dabei die hintere Randfuge zu versiegeln; währenddessen bewegt sich die untere Düse 36a in ihre Ruhestellung unterhalb der Aufstellebene der Rollen 14 zurück. Gleichzeitig kann in den Abschnitt 2a der Versiegelungsstation das als nächstes zu versiegelnde Glastafelpaar einlaufen.

Sobald die obere Düse 36 die untere, hintere Ecke des Glastafelpaares 31, 32 erreicht hat, wird sie stillgesetzt und die weitere Zufuhr der pastösen Masse unterbrochen. Die nunmehr fertige Isolierglasscheibe kann durch die Saugförderer 100a bis 100d in der Abnahmestation abgefördert oder von diesen (wie am Beispiel der ersten Zusammenbaulinie beschrieben) zum Verbringen auf ein Lager abgenommen werden. Die obere Düse 36 wird um 180° verschwenkt und im Bereich der vorderen, unteren Ecke in den Zwischenraum zwischen den beiden nachfolgenden Glastafeln eingeführt. Düsen, die sich in den beiden beschriebenen Zusammenbaulinien zum Einspritzen eines einschichtigen oder eines zweischichtigen Stranges in den Zwischenraum zwischen zwei Glastafeln verwenden lassen, sind in den beiden auf Seite 18 der Beschreibung erwähnten zeitgleichen Patentanmeldung beschrieben.

In beiden Zusammenbaulinien könnte man grundsätzlich auf die Paarungsstation 1 verzichten und stattdessen das Paaren der Glastafeln im ersten Abschnitt 2a der Versiegelungsstation durchführen. Zu diesem Zweck könnte man die jeweils erste Glastafel 31 eines Glastafelpaares, welche zunächst in der Laufebene 10 gegen den hinteren Saugförderer 100a und die Luftkissenwand 133 gelehnt eingelaufen ist, mit den vorderen Saugförderern 100b, 100c und 100d übernehmen, indem man diese quer zur Laufrichtung 5 verschiebt, bis sie zur Anlage an der Glastafel 31 gelangen, sie ansaugen und dann durch Entfernen der Saugförderer 100b bis 100d vom Saugförderer 100a und der Stützwand 133 in die vorgesehene Laufebene 10a verbringen. Danach kann die zweite Glastafel 32 im vorgesehenen Abstand zur Glastafel 31 gegen den hinteren Saugförderer 100a und die Luftkissenwand 133 gelehnt in den Abschnitt 2a der Versiegelungsstation einlaufen und deckungsgleich mit der Glastafel 31 positioniert werden. Während dieses Positionierens der Glastafeln im Abschnitt 2a der Versiegelungsstation kann natürlich eine Versiegelung nicht durchgeführt werden, so daß die Taktzeit der Zusammenbaulinien entsprechend verlängert wird.

Die Versiegelungsstation und die Abnahmestation, wie sie in den beiden dargestellten Zusammenbaulinien vorgesehen sind, können auch beim Versiegeln von Isolierglasscheiben eingesetzt werden, die zuvor durch Zwischenfügen eines beidseitig mit einem Kleber beschichteten Abstandhalterrahmens zusammengebaut wurden. Die zusammengebauten, aber noch nicht versiegelten Isolierglasscheiben können beispielsweise von einem Zwischenförderer, der so aussehen kann wie der Zwischenförderer 28, in den ersten Abschnitt 2a der Versiegelungsstation überführt werden und dort kann die Versiegelung genauso ablaufen, wie es vorstehend an Hand der beiden Zusammenbaulinien beschrieben wurde. Düsen, die für das Versiegeln solcher Isolierglasscheiben geeignet sind, sind in der DE 3 217 410 C2 beschrieben.

**Patentansprüche**

1. Vorrichtung für das schlupffreie Fördern von zwei Tafeln, insbesondere von Glastafeln, welche deckungsgleich und parallel zueinander auf Abstand gehalten und über eine ihrer Großflächen abgestützt sind, in ihrer Ebene (nachfolgend als die Laufebene der jeweiligen Tafel bezeichnet), in beliebiger insbesondere in geneigter, vertikaler oder annähernd vertikaler Stellung, dadurch gekennzeichnet, daß wenigstens zwei synchron antreibbare, parallel zueinander laufende, einander mit Abstand gegenüberliegende Saugförderer (100) vorgesehen sind, welche zum Angriff an den einander abgewandten Großflächen der beiden Tafeln (31, 21) bestimmt sind.

2. Vorrichtung nach Anspruch 1, dadurch gekennzeichnet, daß der Abstand gegenüberliegender Saugförderer (100) veränderbar ist.

3. Vorrichtung nach Anspruch 1 oder 2, dadurch gekennzeichnet, daß wenigstens auf einer Seite der beiden Laufebenen (10, 10a) zwei oder mehr, vorzugsweise drei Saugförderer (100b–100d) vorgesehen sind, welche in Laufrichtung (5) mit Abstand nebeneinander angeordnet sind und eine gemeinsame Laufebene (10, 10a) haben.

4. Vorrichtung nach Anspruch 3, dadurch gekennzeichnet, daß der Abstand der auf einer Seite einer Laufebene (10, 10a) nebeneinander liegenden Saugförderern (100b–100d) veränderbar ist.

5. Vorrichtung nach Anspruch 4, dadurch gekennzeichnet, daß im Falle von mehr als zwei auf einer Seite einer Laufebene (10, 10a) nebeneinanderliegenden Saugförderern (100b–d) deren Abstand in der Weise veränderbar ist, daß die Abstandsverhältnisse erhalten bleiben.

6. Vorrichtung nach einem der vorhergehenden Ansprüche, dadurch gekennzeichnet, daß für das Abstützen einer der Tafeln (31, 32) über ihre eine Großfläche eine zusätzliche, nicht als Saugförderer ausgebildete Stützeinrichtung (133) vorgesehen ist, deren Stützebene mit der Laufebene (10) des bzw. der benachbarten Saugförderer (100a) zusammenfällt.

7. Vorrichtung nach Anspruch 3 und 6, dadurch gekennzeichnet, daß die zusätzliche Stützeinrichtung (133) auf jener Seite der Laufebenen (10, 10a) angeordnet ist, auf welcher sich nicht mehrere Saugförderer (100) in Laufrichtung (5) nebeneinander befinden.

8. Vorrichtung nach Anspruch 6 oder 7, dadurch gekennzeichnet, daß die zusätzliche Stützeinrichtung (133) eine Luftkissenwand ist.

9. Vorrichtung nach Anspruch 8, dadurch gekennzeichnet, daß die Luftaustrittsöffnungen (134) der Luftkissenwand (133) mit der Blasseite eines Gebläses (107) verbunden sind, dessen Saugseite mit den Saugförderern (100) verbunden ist.

10. Vorrichtung nach einem der vorstehenden Ansprüche, dadurch gekennzeichnet, daß die Saugförderer (100) jeweils einen waagerechten, zur Laufebene (10, 10a) hin offenen Unterdruckkanal (115) aufweisen, welcher in der Vorderseite eines langgestreckten Trägers (108) ausgebildet ist, in welchem sich zumindest eine mit einer Unterdruckquelle verbundene Saugöffnung (121) befindet und welcher von zwei endlosen, parallelen, mit ihrer Vorderseite i.w. in der gemeinsamen Laufebene (10, 10a) angeordneten, synchron und in gleicher Richtung antreibbaren Riemen (103) beidseits flankiert ist.

11. Vorrichtung nach Anspruch 10, dadurch gekennzeichnet, daß das Arbeitstrum (103a) der Riemen (103) auf Rollen gelagert ist.

12. Vorrichtung nach einem der vorstehenden Ansprüche, zum Fördern von Tafeln in geneigter, insbesondere annähernd vertikaler, oder in vertikaler Stellung, dadurch gekennzeichnet, daß unterhalb der Saugförderer (100) eine Aufstelleinrichtung oder Auffangeinrichtung mit Auflagern (14, 14a) für den unteren Rand der Tafeln angeordnet ist.

13. Vorrichtung nach Anspruch 12, dadurch gekennzeichnet, daß die Aufstelleinrichtung als synchron mit den Saugförderern (100) antreibbarer Aufstellförderer ausgebildet ist.

14. Vorrichtung nach Anspruch 12 oder 13, dadurch gekennzeichnet, daß die Auflager (14, 14a) sich mindestens von der einen bis zur anderen Laufebene (10, 10a) erstrecken.

15. Vorrichtung nach Anspruch 12, 13 oder 14, dadurch gekennzeichnet, daß die Auflager (14, 14a) absenkbar sind.

16. Vorrichtung nach einem der Ansprüche 13 bis 15, dadurch gekennzeichnet, daß die Auflager (14, 14a) synchron antreibbare Rollen sind.

17. Vorrichtung nach einem der vorstehenden Ansprüche, zum waagerechten Fördern von Glastafeln in annähernd vertikaler Stellung, dadurch gekennzeichnet, daß zwischen zwei in Laufrichtung (5) aufeinanderfolgenden Abschnitten (2a und 2b bzw. 2a und 84) der Vorrichtung mit je mindestens einem Paar von Saugförderern (100) wenigstens eine Düse (36, 36a) angeordnet ist, von denen wenigstens eine Düse (36) quer zur Laufrichtung (5) der Saugförderer (100) parallel zu den Laufebenen (10, 10a) verfahrbar ist und deren Austrittsöffnung(en) zum Einspritzen eines Stranges (67) aus einer pastösen und nachfolgend erstarrenden Masse längs des Glastafelrandes in den Zwischenraum zwischen den Glastafeln (31, 32) zwischen den beiden Laufebenen (10, 10a) liegt bzw. liegen.

18. Vorrichtung nach Anspruch 17, dadurch gekennzeichnet, daß wenigstens die eine quer zur Laufrichtung verfahrbare Düse (36) um eine zu den Laufebenen (10, 10a) senkrechte Achse (37) fortschreitend um je 90° verschwenkbar ist.

19. Vorrichtung nach Anspruch 17 oder 18, dadurch gekennzeichnet, daß zwei Düsen (36, 36a) vorgesehen sind, von denen eine (36a) nur zum Erzeugen eines Stranges (67) längs des unteren Randes der Glastafeln (31, 32) vorgesehen ist.

20. Vorrichtung nach Anspruch 17 oder 18 mit nur einer Düse, dadurch gekennzeichnet, daß im ersten Abschnitt (2a) und im zweiten Abschnitt (2b) der Vorrichtung jeweils ein Aufstellförderer gemäß Anspruch 13, 14 oder 16 vorgesehen ist, daß die Auflager (14, 14a) des Aufstellförderers im zweiten Abschnitt (2b) der Vorrichtung absenkbar sind, und daß auf den zweiten ein dritter Abschnitt (84) der Vorrichtung mit wenigstens einem Paar von Saugförderern (100) folgt, unter denen kein zusätzlicher Aufstellförderer oder ein Aufstellförderer mit absenkbaren Auflagern angeordnet ist.

21. Vorrichtung nach einem der Ansprüche 17 bis 19 mit zwei Düsen, dadurch gekennzeichnet, daß im ersten Abschnitt (2a) der Vorrichtung ein Aufstellförderer gemäß Anspruch 13, 14 oder 16 mit absenkbaren Auflagern (14) gemäß Anspruch 15 vorgesehen ist, und daß im zweiten Abschnitt (87) der Vorrichtung kein Aufstellförderer oder ein Aufstellförderer mit absenkbaren Auflagern vorgesehen ist.

22. Vorrichtung nach einem der Ansprüche 17 bis 21, dadurch gekennzeichnet, daß im ersten Abschnitt (2a) der Vorrichtung auf der einen Seite der Laufebenen (10, 10a) ein Saugförderer (100) und darüber eine Stützeinrichtung (133) gemäß einem der Ansprüche 6 bis 8 und auf der anderen Seite der Laufebenen (10, 10a) zwei oder mehr Saugförderer (100a–100b) übereinander angeordnet sind, welche eine gemeinsame Laufebene (10b) haben.

23. Vorrichtung nach einem der Ansprüche 17 bis 22, dadurch gekennzeichnet, daß im letzten Abschnitt (84) der Vorrichtung auf der besagten einen Seite der Laufebenen (10, 10a) zwei oder mehr Saugförderer (100b–100d) übereinander angeordnet sind, welche eine gemeinsame Laufebene (10) haben, und daß nur dem unteren dieser Saugförderer (100b) auf der anderen Seite der Laufebenen (10, 10a) ein Saugförderer (100a) gegenüberliegt.

24. Vorrichtung mit nur einer Düse nach Anspruch 20 und 22, dadurch gekennzeichnet, daß der erste und der zweite Abschnitt (2a und 2b) der Vorrichtung hinsichtlich der Anordnung der Saugförderer (100) gleich ausgebildet sind.

**Claims**

1. An apparatus for a slipless conveyance of two plates, particularly of glass plates, which are held to be coextensive and in register and parallel to each other and spaced apart and are supported at one of their broadsides and are conveyed in its plane (which will subsequently be described as the plane of travel of a given plate) and are conveyed in any desired position, particularly in an inclined, vertical or approximately vertical position, characterized in that at least two vacuum-applying conveyors (100) are provided, which are adapted to by driven in synchronism and extend parallel to each other and are disposed opposite to each other and spaced apart and intended to engage the two plates (31, 21) at those of their broadsides which are remote from each other.

2. An apparatus according to claim 1, characterized in that the spacing of vacuum-applying conveyors (100) which are opposite to each other and spaced apart is variable.

3. An apparatus according to claim 1 or 2, characterized in that two or more and preferably three vacuum-applying conveyors (100b–100d) are provided on at least one side of the two planes of travel (10, 10a) and said vacuum-applying conveyors are juxtaposed and spaced apart in the direction of travel (5) and have a common plane of travel (10, 10a).

4. An apparatus according to claim 3, characterized in that the spacing of the suction conveyors (100b–100d) which are juxtaposed on one side of a plane of travel (10, 10a) is variable.

5. An apparatus according to claim 4, characterized in that more than two juxtaposed vacuum-applying conveyors (100b–d) are provided on one side of a plane of travel (10, 10a) and their spacing is variable in such a manner that the ratio of the spacings is maintained.

6. An apparatus according to any of the preceding claims, characterized in that additional backing means (133) which do not consist of a vacuum-applying conveyor are provided for supporting one of the plates (31, 32) at its one broadside and have a backing plane which coincides with the plane of travel (10) of the adjacent vacuum-applying conveyor or conveyors (100a).

7. An apparatus according to claims 3 and 6, characterized in that the additional backing means (133) are disposed on that side of the planes of travel (10, 10a) on which a plurality of vacuum-applying conveyors (100) which are juxtaposed in the direction of travel (5) are not provided.

8. An apparatus according to claim 6 or 7, characterized in that the additional backing means (133) consist of an air cushion wall.

9. An apparatus according to claim 8, characterized in that the air outlet openings (134) of the air cushion wall (133) communicate with the discharge side of a fan (107), which on its suction side communicates with the vacuum-applying conveyors (100).

10. An apparatus according to any of the preceding claims, characterized in that each vacuum-applying conveyor (100) has a horizontal vacuum channel (115), which is open towards the plane of travel (10, 10a) and is formed on the forward side of an elongate beam (108), which has at least one vacuum port (121), which communicates with a vacuum source, and said carrier if flanked on both sides by two parallel endless belts (103), which have forward faces which are substantially disposed in the common plane of travel (10, 10a) and which belts are adapted to be synchronously driven in the same direction.

11. An apparatus according to claim 10, characterized in that the working courses (103a) of the belts (103) are movably mounted on rollers.

12. An apparatus according to any of the preceding claims for conveying plates in an inclined position, particularly in an approximately vertical position, or in a vertical position, characterized in that bottom edge-supporting means or intercepting means are provided below the vacuum applying conveyors (100) and comprise supports (14, 14a) for the bottom edge of the plates.

13. An apparatus according to claim 12, characterized in that the bottom edge-supporting means consists of a bottom edge-supporting conveyor, which is adapted to be driven in synchronism with the vacuum-applying conveyors (100).

14. An apparatus according to claim 12 or 13, characterized in that the supports (14, 14a) extend at least from one plane of travel (10, 10a) to the other.

15. An apparatus according to claim 12, 13 or 14, characterized in that the supports (14, 14a) are adapted to be lowered.

16. An apparatus according to any of claims 13 to 15, characterized in that the supports (14, 14a) comprise rollers which are adapted to be driven in synchronism.

17. An apparatus according to any of the preceding claims for a horizontal conveyance of glass plates in an approximately vertical position, characterized in that at least one nozzle (36, 36a) is provided between two sections (2a and 2b or 2a and 84) of the apparatus, which succeed each other in the direction of travel (5) and each of which comprises at least one pair of vacuum-applying conveyors (100), at least one of said nozzles (36) is movable in a direction which is transverse to the direction of travel (5) of the vacuum-applying conveyors (100) and parallel to the planes of travel (10, 10a), and said nozzle has or said nozzles have one or more exit openings which is or are disposed between the two planes of travel (10, 10a) and serves or serve to inject an extrusion (67) consisting of a pastelike and subsequently solidifying material along the edge of the glass plate into the space between the two glass plates (31, 32).

18. An apparatus according to claim 17, characterized in that at least that one nozzle (36) which is movable transversely to the direction of travel is pivotally movable in consecutive steps of 90° about an axis (37) which is at right angles to the planes of travel (10, 10a).

19. An apparatus according to claim 17 or 18, characterized in that two nozzles (36, 36a) are provided, one of which (36a) serves only to produce an extrusion (67) along the bottom edge of the glass plates (31, 32).

20. An apparatus according to claim 17 or 18, which comprises only one nozzle, characterized in that a bottom edge-supporting conveyor according to claim 13, 14 or 16 is provided in each of the first (2a) and second (2b) sections of the apparatus, the supports (14, 14a) of the bottom edge-supporting conveyor in the second section (2b) of the apparatus are adapted to be lowered, the second section is succeeded by a third section (84) of the apparatus, which third section comprises at least one pair of vacuum-applying conveyors (100), and an additional bottom edge-supporting conveyor or a bottom edge-supporting conveyor having supports which are adapted to be lowered is not disposed under the pair of vacuum-applying conveyors of said third section.

21. An apparatus according to any of claims 17 to 19, which comprises two nozzles, characterized in that a bottom edge-supporting conveyor according to claim 13, 14 or 16 is provided in the first section (2a) of the apparatus and comprises supports (14) which are adapted to be lowered, according to claim 16, and no bottom edge-supporting conveyor and no bottom edge-supporting conveyor comprising supports which are adapted to be lowered is provided in the second section (87) of the apparatus.

22. An apparatus according to any of claims 17 to 21, characterized in that the first section (2a) of the apparatus comprises on one side of the planes of travel (10, 10a) a vacuum-applying conveyor (100) and above said vacuum-applying conveyor comprises backing means (133) according to any of claims 6 to 8 and on the other side of the planes of travel (10, 10a) comprises two or more vacuum-applying conveyors (100a–100b) which are arranged one over the other and have a common plane of travel (10b).

23. An apparatus according to any of claims 17 to 22, characterized in that the last section (84) of the apparatus comprises on said one side of the planes of travel (10, 10a) two or more vacuum-applying conveyors (100b–100d), which are arranged one over the other and have a common plane of travel (10), and only the lower one of said vacuum-applying conveyors (100b) is confronted by a vacuum-applying conveyor (100a) disposed on the other side of the planes of travel (10, 10a).

24. An apparatus comprising only one nozzle according to claims 20 and 22, characterized in that the first and second sections (2a and 2b) of the apparatus have the same design as regards the arrangement of the vacuum-applying conveyors (100).

**Revendications**

1. Dispositif pour le transport antidérapant de deux panneaux, en particulier de vitrages tenus à une certaine distance congruents et parallèles l'un à l'autre, et étayés sur une de leurs grandes surfaces, dans leur plan (ci-dessous également dénommée portée du panneau respectif), dans n'importe quelle position, en particulier inclinée, verticale ou approximativement verticale, caractérisé par le fait qu'il est prévu au moins deux transporteurs à ventouses commandés de manière synchrone, roulant parallèlement l'un à l'autre, se trouvant opposé à une certaine distance (100), qui sont désignés pour l'application sur les grandes surfaces détournées l'une de l'autre des deux panneaux (31, 21).

2. Dispositif selon revendication 1 caractérisé par le fait que la distance des transporteurs à ventouses opposés (100) est variable.

3. Dispositif d'après revendication 1 ou 2, caractérisé par le fait qu'au moins sur un côté des deux portées (10, 10a) sont prévus deux ou plus, de préférence trois transporteurs à ventouse (100b–100d), placés dans le sens de la marche (5) à une certaine distance un à côté de l'autre et avec une portée (10, 10a) commune.

4. Dispositif d'après revendication 3, caractérisé par le fait que la distance des transporteurs à ventouses (100b–100d) situés à côté l'un de l'autre sur le côté d'une portée (10, 10a) est variable.

5. Dispositif d'après revendication 4 caractérisé par le fait qu'en cas où plus de deux transporteurs à ventouses (100b–d) situés à côté l'un de l'autre sur un côté d'une portée (10, 10a) leur distance est variable de telle manière que leurs conditions d'écartement restent les mêmes.

6. Dispositif d'après une des revendications ci-dessus caractérisé par le fait qu'il est prévu pour l'étayage d'un des panneaux (31, 32) sur une des grandes surfaces un dispositif d'étayage supplémentaire (133) qui n'est construit comme un transporteur à ventouses, dont le plan d'étayage coïncide avec la portée (10) du transporteur à ventouses ou de son voisin (100a).

7. Dispositif selon revendication 3 et 6 caractérisé par le fait que le dispositif d'étayage (133) est placé sur le côté de la portée (10, 10a) sur lequel ne se trouvent pas plusieurs transporteurs à ventouses (100) dans le sens de la marche l'un à côté de l'autre.

8. Dispositif d'après revendication 6 ou 7 caractérisé par le fait que le dispositif d'étayage supplémentaire (133) est une cloison à coussin pneumatique.

9. Dispositif d'après revendication 8, caractérisé par le fait que les orifices de sortie d'air (134) de la cloison à coussin pneumatique (133) sont reliés avec le côté de soufflage d'un compresseur (107) dont le côté d'aspiration est relié aux transporteurs à ventouses (100).

10. Dispositif d'après une des revendications précédentes caractérisé par le fait que les transporteurs à ventouses (100) présentent chacun un canal à dépression (115) ouvert vertical par rapport à la portée (10, 10a), qui est formé dans la face d'un support (108) allongé, dans lequel se trouve au moins une ouïe d'aspiration (121) reliée à une source de vide et lequel est flanqué des deux côtés par deux courroies (103) sans fin parallèles, disposées avec leur face principalement dans la portée commune (10, 10a), de manière synchrone et actionnées dans le même sens.

11. Dispositif d'après revendication 10, caractérisé par le fait que le brin de travail (103a) de la courroie (103) est logé sur des rouleaux.

12. Dispositif d'après une des revendications ci-dessus, pour le transport de panneaux en position inclinée, en particulier approximativement verticale ou verticale, caractérisé par le fait que sous le transporteur à ventouses (100) est placé un dispositif de mise debout ou dispositif de saisie avec des coussinets (14, 14a) pour la tranche inférieure des panneaux.

13. Dispositif selon la revendication 12 caractérisé que le dispositif de levage est construit comme un élévateur actionné de manière synchrone avec le transporteur à ventouses (100).

14. Dispositif selon les revendications 12 ou 13, caractérisé par le fait que les coussinets (14, 14a) s'étendent au moins d'une portée à l'autre (10, 10a).

15. Dispositif selon revendications 12, 13 ou 14, caractérisé par le fait que les coussinets (14, 14a) peuvent être abaissés.

16. Dispositif selon l'une des revendications 13 à 15, caractérisé par le fait que les coussinets (14, 14a) sont des rouleaux actionnés de manière synchrone.

17. Dispositif selon l'une des revendications ci-dessus pour le transport horizontal de vitrages dans une position approximativement verticale, caractérisé par le fait qu'entre deux segments successifs (2a et 2b ou 2a et 84) placés dans le sens de la marche (5) du dispositif avec au moins une paire de transporteurs à ventouses (100) se trouve au moins une tuyère (36, 36a). De ces deux segments au moins une tuyère (36) peut être déplacée en travers du sens de la marche (5) des transporteurs à ventouses (100) parallèlement aux portées (10, 10a). Le ou les orifices de sortie de ces segments se trouve(ent) entre les deux portées (10, 10a) pour l'injection d'une coulée (67) d'une masse pâteuse se solidifiant par la suite le long de la tranche du panneau dans l'intervalle entre les panneaux (31, 32).

18. Dispositif selon revendication 17 caractérisé par le fait qu'au moins une tuyère (36) pouvant être déplacée en travers du sens de la marche peut être inclinée progressivement autour d'un axe vertical (37) sous un angle à 90° aux portées (10, 10a).

19. Dispositif selon revendication 17 ou 18, caractérisé par le fait que deux tuyères (36, 36a) sont prévues dont l'une (36a) seulement pour la production d'une coulée (67) le long de la tranche inférieure des vitrages (31, 32).

20. Dispositif selon revendication 17 ou 18 avec seulement une tuyère, caractérisé par le fait que dans le premier segment (2a) et dans le deuxième segment (2b) du dispositif est prévu chaque fois un élévateur selon revendication 13, 14 ou 16. Que les coussinets (14, 14a) de l'élévateur dans le deuxième segment (2b) du dispositif peuvent être abaissés et qu'un troisième segment (84) du dispositif suit le deuxième avec au moins une paire de transporteurs à ventouses (100) parmi lesquels n'est placé aucun autre élévateur supplémentaire ou élévateur avec coussinets pouvant être abaissé.

21. Dispositif selon l'une des revendications 17 à 19 avec deux tuyères, caractérisé par le fait que dans le premier segment (2a) du dispositif est prévu un élévateur selon revendication 13, 14 ou 16 avec des coussinets pouvant être abaissés (14) selon revendication 16 et que dans le deuxième segment (87) du dispositif n'est prévu aucun élévateur ou élévateur avec coussinets pouvant être abaissés.

22. Dispositif selon une des revendications 17 à 21, caractérisé par le fait que dans le premier segment (2a) du dispositif sur un des côtés des portées (10, 10a) un transporteur à ventouses (100) et au-dessus un dispositif de support (133) selon une des revendications 6 à 8 et sur l'autre côté des portées (10, 10a) d'un ou plusieurs transporteurs à ventouses (100a–100b) sont disposés l'un au-dessus de l'autre possédant une portée (10b) commune.

23. Dispositif selon l'une des revendications 17 à 22, caractérisé par le fait que dans le dernier segment (84) du dispositif sur le côté donné des portées (10, 10a) deux ou plusieurs transporteurs à ventouses (100b–100d) sont disposés l'un au-des-

sus de l'autre possèdant une portée (10) commune et qu'un transporteur à ventouses (100a) est placé seulement à l'opposé du transporteur à ventouses inférieur (100b) sur l'autre côté des portées (10, 10a).

24. Dispositif avec seulement une tuyère selon revendications 20 et 22, caractérisé par le fait que le premier et le deuxième segment (2a et 2b) du dispositif sont construits égaux par rapport à la disposition des transporteurs à ventouses (100).

*Fig. 1*

*Fig. 2*

EP 0 222 349 B1

_Fig. 3_

_Fig.3a_

_Fig.3b_

Fig. 4

Fig. 5

**Fig. 6**   **Schnitt VI-VI**

## Fig.7

## Fig. 8

## Fig. 8a

_Fig. 9_

EP 0 222 349 B1